# EUROPEAN PATENT SPECIFICATION

(11) **EP 4 190 171 B1**
(45) Date of publication and mention of the grant of the patent: **11.09.2024**
(21) Application number: 21864417.7
(22) Date of filing: 02.09.2021
(51) Int. Cl.: A23L 27/10

(54) **LIQUID SEASONING CONTAINING EDIBLE PLANT INGREDIENTS AND PRODUCTION METHOD THEREFOR**
FLÜSSIGE WÜRZE MIT ESSBAREN PFLANZENINHALTSSTOFFEN UND HERSTELLUNGSVERFAHREN DAFÜR
ASSAISONNEMENT LIQUIDE CONTENANT DES INGRÉDIENTS VÉGÉTAUX COMESTIBLES ET SON PROCÉDÉ DE PRODUCTION

(30) Priority: 02.09.2020 JP 2020147547
(43) Date of publication of application: 07.06.2023
(73) Proprietor: Mizkan Holdings Co., Ltd., Handa-shi, Aichi 475-8585 (JP)
(72) Inventor: MOMMA, Daisuke, Handa-shi, Aichi 475-8585 (JP); TANAKA, Shungo, Handa-shi, Aichi 475-8585 (JP); IHARA, Junichiro, Handa-shi, Aichi 475-8585 (JP)
(74) Representative: Hasegawa, Kan
(86) International application number: PCT/JP2021/032353
(87) International publication number: WO 2022/050364

(56) References cited:
- WO-A1-2013/103031
- WO-A1-2020/089681
- CN-A- 106 820 067
- CN-A- 106 820 067
- JP-A- 2010 124 696
- JP-A- 2015 023 803
- JP-A- 2019 071 851
- US-A1- 2020 187 543
- US-A1- 2020 205 455

## Description

### TECHNICAL FIELD

The present invention relates to a liquid seasoning containing edible plant ingredients and a production method thereof.

### BACKGROUND ART

Off-flavors are likely to occur in the process of drying products with relatively high moisture contents such as potatoes, vegetables including pumpkin, and fruits including apples, and their frozen products which easily leach moisture from their raw materials. A known method for suppressing the formation of such off-flavors includes roasting such products together with grains or granular inorganic materials (JP2007-053915 A ).

Another known method for suppressing off-flavor of products such as soybeans, milk, fruits, vegetables, etc. includes using an off-flavor suppressant containing isobutyl angelate as an active ingredient (JP2020-110139 A).

US 2020205455 A1 and US 2020187543 A1 discloses liquid seasoning including fine food particles.

CN 106820067 A discloses a kind of duck meat essence and its production method.

### SUMMARY OF INVENTION

### PROBLEM TO BE SOLVED BY THE INVENTION

However, since the method described in JP2007-053915 A requires roasting of the product, this method is not applicable to ingredients in a liquid seasoning.

The method described in JP2020-110139 A involves adding isobutyl angelate flavor to the product, and is also not effective in suppressing off-flavors generated from edible plant ingredients based on a different mechanism.

The problem addressed by the present invention is to provide a liquid seasoning containing edible plant ingredients of different sizes whose off-flavor formation is suppressed and which can be stored for a long period of time.

### MEANS TO SOLVE THE PROBLEM

The present inventors have found that it is possible to obtain a liquid seasoning containing edible plant ingredients of different sizes in which off-flavors from each edible-plant-ingredient fraction is suppressed and which can be stored for a long period of time, by adjusting the mass ratio of an edible-plant-ingredient fraction B, which passes through a sieve with an opening of 2.50 centimeters and remains on a sieve with an opening of 75 micrometers, to an edible-plant-ingredient fraction A, which remains on a sieve with an opening of 2.50 centimeters, to within a predetermined range, and also by adjusting the hexanal content in the ingredient fraction A, the dimethyl disulfide (DMDS) content in the ingredient fraction B, and the ratio of the hexanal content in the ingredient fraction A to the hexanal content in the ingredient fraction B to within respective predetermined ranges. The present inventors have further found that the above problem can thereby be solved, and have completed the present invention.

Specifically, aspects of the present invention include the following aspects.
[Aspect 1] A liquid seasoning containing edible plant ingredients and satisfying the requirements (1) to (5) below.
   (1) The content of an edible-plant-ingredient fraction A, which remains on a sieve with an opening of 2.50 centimeters, is 10 mass % or higher.
   (2) The content of an edible-plant-ingredient fraction B, which passes through a sieve with an opening of 2.50 centimeters and remains on a sieve with an opening of 75 micrometers, is 10 mass % or higher and 80 mass % or lower.
   (3) The hexanal content in the ingredient fraction A in terms of oil-and-fat mass basis is 1 ppb or higher and 15000 ppb or lower.
   (4) The dimethyl disulfide (DMDS) content in the ingredient fraction B in terms of wet mass basis is 0.01 ppb or higher and 1000 ppb or lower.
   (5) The mass ratio of the hexanal content in the ingredient fraction A in terms of oil-and-fat mass basis to the hexanal content in the ingredient fraction B in terms of oil-and-fat mass basis is higher than 1.0.
[Aspect 2] The liquid seasoning according to Aspect 1, wherein the mass ratio of the DMDS content in the ingredient fraction A in terms of wet mass basis to the DMDS content in the ingredient fraction B in terms of wet mass basis is lower than 1.0.
[Aspect 3] The liquid seasoning according to Aspect 1 or 2, wherein the dimethyl trisulfide (DMTS) content in the ingredient fraction B in terms of wet mass basis is 0.01 ppb or higher and 3000 ppb or lower.
[Aspect 4] The liquid seasoning according to any one of Aspects 1 to 3, wherein when the ingredient fraction A is separated by one-dimensional GC/MS analysis and the separated ingredients are subjected to measurement using Pulsed Flame Photometric Detection (PFPD), the ratio (β/α) of a PFPD peak area β, where m/z = 61 and 90 are both detected in an interval with retention times of from 13 to 18 minutes, to a PFPD peak area α, where m/z = 45, 79, and 94 are all detected in an interval with retention times of from 8 to 11 minutes, is 0.1 or higher but lower than 1000.
[Aspect 5] The liquid seasoning according to any one of Aspects 1 to 4, wherein the oil-and-fat content in the fraction B is 2 mass % or higher.
[Aspect 6] The liquid seasoning according to any one of Aspects 1 to 5, wherein the edible plant in the fraction A and/or in the fraction B contains one or more species of edible plants selected from vegetables, cereals, mushrooms, and fruits.
[Aspect 7] The liquid seasoning according to any one of Aspects 1 to 6, wherein the edible plant in the fraction A and/or in the fraction B contains a Solanaceae plant and/or an Allium plant.
[Aspect 8] The liquid seasoning according to any one of Aspects 1 to 7, wherein the edible plant in the fraction A and/or in the fraction B contains one or more species of edible plants selected from tomato, eggplant, small onion, corn, shimeji mushroom, and eryngii mushroom.
[Aspect 9] The liquid seasoning according to any one of Aspects 1 to 8, wherein the fraction A and the fraction B contain edible plants belonging to the same class.
[Aspect 10] The liquid seasoning according to any one of Aspects 1 to 8, wherein the fraction A and the fraction B contain edible plants belonging to the same species.
[Aspect 11] The liquid seasoning according to any one of Aspects 1 to 10, wherein the flow-down distance of the liquid seasoning when measured with a Bostwick viscometer (measurement time: 30 seconds, measurement temperature: 80 °C) is 28 cm or less.
[Aspect 12] A method for producing a liquid seasoning according to any one of Aspects 1 to 11, comprising the steps of:
   (i) preparing a liquid mixture containing edible plant ingredients and satisfying
      (1) containing an edible-plant-ingredient fraction A, which remains on a sieve with an opening of 2.50 centimeters, in an amount of 10 mass % or higher,
      (2) containing an edible-plant-ingredient fraction B, which passes through a sieve with an opening of 2.50 centimeters and remains on a sieve with an opening of 75 micrometers, in an amount of 10 mass % or higher and 80 mass % or lower,
      (3) having a hexanal content in the ingredient fraction A of 1 ppb or higher and 15000 ppb or lower in terms of oil-and-fat mass basis,
      (4) having a DMDS content in the ingredient fraction B of 0.01 ppb or higher and 1000 ppb or lower in terms of wet mass basis, and
      (5) having a mass ratio of the hexanal content in the ingredient fraction A in terms of oil-and-fat mass basis to the hexanal content in the ingredient fraction B in terms of oil-and-fat mass basis of higher than 1.0; and
   (ii) heating the liquid mixture at a temperature of 80 °C or higher for 5 minutes or longer.
[Aspect 13] The method according to Aspect 12, wherein the heating in step (ii) is carried out until the mass ratio of the hexanal content in the ingredient fraction A in terms of oil-and-fat mass basis to the hexanal content in the ingredient fraction B in terms of oil-and-fat mass basis decreases by 10% or more during the heating.
[Aspect 14] The method according to Aspect 12 or 13, wherein the heating in step (ii) is carried out until when the ingredient fraction A is separated by one-dimensional GC/MS analysis and the separated ingredients are subjected to measurement using Pulsed Flame Photometric Detection (PFPD), the ratio (β/α) of a PFPD peak area β, where m/z = 61 and 90 are both detected in an interval with retention times of from 13 to 18 minutes, to a PFPD peak area α, where m/z = 45, 79, and 94 are all detected in an interval with retention times of from 8 to 11 minutes, increases to 1.0 times or more during the heating.
[Aspect 15] The method according to any one of Aspects 12 to 14, wherein the heating treatment in step (ii) is carried out until the mass ratio of the DMDS content in the ingredient fraction A to the DMDS content in the ingredient fraction B decreases by 10% or more during the heating.

### EFFECT OF THE INVENTION

The present invention provides a liquid seasoning containing edible plant ingredients of different sizes whose off-flavor formation is suppressed and which can be stored for a long period of time.

### DESCRIPTION OF EMBODIMENTS

The present invention will now be described based on specific embodiments. However, the present invention is not bound by the following embodiments, but can be implemented in any form to the extent that it does not depart from the intent of the invention.

### [Liquid seasoning containing edible plant ingredients]

An embodiment of the present invention relates to a liquid seasoning containing edible plant ingredients and satisfying the requirements explained below (hereinafter also referred to as "the liquid seasoning containing edible plant ingredients of the present invention" or simply as "the liquid seasoning of the present invention").

### ·specific mesh-on and/or specific mesh-pass fraction:

The liquid seasoning of the present invention is characterized by specific mesh-on and/or specific mesh-pass ingredient fractions obtained by sieve fractionation. The term "mesh-on" herein refers to an ingredient fraction remaining on a sieve with a specific size, while the term "mesh-pass" herein refers to an ingredient fraction passing through a sieve with a specific size. The content of each fraction is determined by fractionating the liquid seasoning through sieves with different openings. For example, the term "1-mesh-on" refers to an ingredient fraction remaining on a sieve with an opening of 2.50 centimeters, while the term "1-mesh-pass 200-mesh-on" refers to an ingredient fraction that passes through a sieve with an opening of 2.50 centimeters and remains on a sieve with an opening of 75 micrometers. The term "1-mesh-on (or -pass)" refers to an ingredient fraction that remains on (or passes through) a sieve with an opening of 2.50 centimeters, while the term "200-mesh-on (or -pass)" refers to an ingredient fraction that remains on (or passes through) a sieve with an opening of 75 micrometers.

Specifically, the wire thickness and mesh spacing used for mesh-on/mesh-pass judgment shall be the values specified in U.S.A. Standard Testing Sieves ASTM Specifications E 11-04J (for example, 1 mesh corresponds to "1.00" as defined in the Nominal Dimensions, Permissible Variation for Wire Cloth of Standard Testing Sieves (U.S.A.) Standard Series, and 200 mesh corresponds to "No. 200" as defined therein) or values specified in a similar standard.

According to the present invention, when measuring the content of each of fractions A and B in a liquid seasoning, the amount of the ingredient mass in a wet state is measured. More specifically, 100 g sample of the liquid seasoning (20°C) containing ingredients to be measured is spread thinly and evenly on a sieve with an opening of 2.50 centimeters and a sieve with an opening of 75 micrometers stacked in this order from the top to the bottom and left to stand for 10 minutes, and the mass remaining on each sieve is measured and expressed as a mass percentage with the mass of the entire liquid seasoning as the denominator, whereby the percentage(s) of the fraction(s) A and/or B in the liquid seasoning of the present invention can be determined as the percentage in terms of wet mass basis.

A specific mesh-on and/or specific mesh-pass ingredient "fraction" herein refers to a partial composition of a liquid seasoning that behaves in a similar manner with respect to specific mesh-on and/or specific mesh-pass properties. Such a "fraction" usually includes one or more species of ingredients and one or more kinds of medium. It should be noted here that a specific mesh-on ingredient "fraction" can include not only ingredients with a specific mesh-on size, but also ingredients with a specific mesh-pass size. (For example, the 1-mesh-on ingredient fraction (fraction A) described below may contain not only edible plant ingredients of 1-mesh-on size, but also edible plant ingredients of 1-mesh-pass size, and the 1-mesh-pass 200 mesh-on ingredient fraction (fraction B) may contain not only edible plant ingredients of 1-mesh-pass and 200-mesh-on size, but also edible plant ingredients of 200-mesh-pass size.) This is due to the fact that even ingredients with a specific mesh-pass size may not pass through the specific mesh sieve and remain on the sieve, depending on the combination with other ingredients and media coexisting as well as the properties of the liquid seasoning. Thus, even a fraction containing ingredients with a specific mesh-pass size may be determined as a specific mesh-on fraction if it behaves in the same manner and remains on the specific mesh sieve when the liquid seasoning is sieve-fractionated according to the procedure described above.

### *Ingredient fraction A:

The liquid seasoning of the present invention is characterized in that the content of the ingredient fraction that remains on a sieve with an opening of 2.50 centimeters (also referred to as "ingredient fraction A" or "fraction A") corresponds to a predetermined lower limit or higher. Specifically, the relatively large 1-mesh-on edible plant ingredients in this fraction tend to give off distinctive off-flavors (they may undergo unique reactions due to component reactions under anaerobic conditions because of their large size and lack of thermal convection). The liquid seasoning of the present invention is useful because it can suppress such off-flavors which are particularly significant issue for seasonings containing the ingredient fraction A, which includes such 1-mesh-on ingredients, in a predetermined amount or more.

Specifically, the content ratio of the ingredient fraction A in the liquid seasoning of the present invention in terms of wet mass basis may usually be 10 mass % or higher, preferably 15 mass % or higher, more particularly 20 mass % or higher, still particularly 25 mass % or higher, or 30 mass % or higher, or 35 mass % or higher, especially 40 mass % or higher. On the other hand, the upper limit for the content ratio of the ingredient fraction A in the liquid seasoning of the present invention is not especially restricted, but may be usually 90 mass % or lower, particularly 80 mass % or lower.

As will be explained below, the fraction A may contain ingredients and liquid medium. The content of the ingredients in fraction A may preferably be usually 50 mass % or higher, particularly 70 mass % or higher, more particularly 90 mass % or higher, especially substantially 100 mass % of the entire mass of fraction A. The upper limit is not especially restricted, and may usually be 100 mass % or lower.

According to the present invention, when measuring the ingredient content in each fraction, the content can be determined by centrifuging the obtained fraction at 15,000 rpm for 1 minute, sufficiently removing the separated liquid medium, and weighing the remainder.

The upper limit for the size of ingredients in ingredient fraction A in the liquid seasoning of the present invention is not particularly restricted. However, since too large ingredients are difficult to swallow, the size of the ingredients may preferably be usually a size of passing through a 0.2-mesh sieve (12.15 cm mesh opening, 5.5 mm wire diameter) or smaller, from the viewpoint of ease of consumption.

### *Ingredient fraction B:

The liquid seasoning of the present invention is further characterized by containing, in addition to the ingredient fraction A, a different ingredient fraction that passes through a sieve with an opening of 2.50 centimeters and remains on a sieve with an opening of 75 micrometers (hereinafter also referred to as "ingredient fraction B" or "fraction B") at a content rate of within a predetermined range. Specifically, such edible plant ingredients having medium sizes that pass through a sieve with an opening of 2.50 centimeters and remain on a sieve with an opening of 75 micrometers tend to give off distinctive off-flavors that are different from the off-flavors of the ingredients in the ingredient fraction A (their relatively small sizes tend to cause thermal convection and thereby promote oxidation reactions that are different from those of the ingredients in the fraction A). The liquid seasoning of the present invention is useful because it can suppress such off-flavors which are particularly significant issue for seasonings containing the ingredient fraction B, which contains such ingredients that pass through a sieve with an opening of 2.50 centimeters and remain on a sieve with an opening of 75 micrometers.

Specifically, the lower limit for the content ratio of the ingredient fraction B in the liquid seasoning of the present invention in terms of wet mass basis ratio may preferably be usually 10 mass % or higher, preferably 12 mass % or higher, more particularly 15 mass % or higher, still particularly 20 mass % or higher, or 25 mass % or higher, or 30 mass % or higher, especially 40 mass % or higher. On the other hand, the upper limit for the content ratio of the ingredient fraction B in the liquid seasoning of the present invention may preferably be usually 80 mass % or lower, preferably 75 mass % or lower, more particularly 70 mass % or lower, still particularly 65 mass % or lower, or 60 mass % or lower, or 55 mass % or lower, especially 50 mass % or lower.

As will be explained below, the fraction B may contain ingredients and liquid medium. The content of the ingredients in fraction B may preferably be usually 50 mass % or higher, particularly 70 mass % or higher, more particularly 90 mass % or higher, especially substantially 100 mass % of the entire mass of fraction B. The upper limit is not especially restricted, and may usually be 100 mass % or lower.

### *Fraction C:

The liquid seasoning of the present invention may contain, in addition to the ingredient fractions A and B, a different fraction that passes through a sieve with an opening of 75 micrometers (hereinafter also referred to as "fraction C"). However, too much of this fraction C may cause the liquid seasoning to be watery in quality. Therefore, the content of the fraction C in the liquid seasoning of the present invention may preferably be adjusted to a predetermined value or lower, and most or all of the liquid medium may preferably be contained in the fraction(s) A and/or B.

Specifically, the content ratio of the fraction C in the liquid seasoning of the present invention in terms of wet mass basis ratio may preferably be usually 30 mass % or lower, particularly 25 mass % or lower, more particularly 20 mass % or lower, still particularly 15 mass % or lower, or 10 mass % or lower, or 8 mass % or lower, especially 5 mass % or lower. On the other hand, the upper limit for the content ratio of the fraction C in the liquid seasoning of the present invention is not particularly restricted, but may preferably be usually 0 mass % or higher, particularly 1 mass % or higher, especially 2 mass % or higher.

As will be explained below, the fraction C may contain ingredients and liquid medium. The content of the ingredients in the fraction C may preferably be usually 50 mass % or lower, particularly 30 mass % or lower, more particularly 10 mass % or lower, especially substantially 0 mass % of the total mass of the fraction C. The lower limit is not especially restricted, but usually 0 mass % or higher.

### *Medium in each fraction:

Each of the ingredient fraction A and the ingredient fraction B is composed of liquid medium (hereinafter also referred to as "medium"), while the fraction C is usually composed mainly of medium (and extremely fine ingredients). The combination of the media contained in these fractions is not limited. Specifically, the media contained in these fractions may be either the same as each other or different from each other. In addition, each fraction may contain either only one medium or two or more media in any combination and at any ratios. The type of each medium is also not restricted, and may be selected from various media including: aqueous media such as water; water-miscible organic solvents; water-immiscible, lipophilic organic media; and liquid oils and fats. Liquid contained in the edible plant that makes up the ingredients may be contained in each fraction as a medium, or conversely, liquid medium contained in each fraction may permeate into the ingredients and form part of the ingredients. Phase separation may also occur within each fraction and/or between two or more fractions, such as separation between an aqueous phase and an oil phase. In particular, the ingredient fraction B may preferably have an oil and fat content satisfying a predetermined lower limit or higher, as will be discussed later.

### *Hexanal content in fraction A in terms of oil-and-fat mass basis:

The liquid seasoning of the present invention may contain hexanal (CAS.No.66-25-1) in the ingredient fraction A at a specific ratio in terms of oil-and-fat mass basis. The term "oil-and-fat mass basis ratio" (also referred to as "oil-and-fat mass basis" or "oil-and-fat mass equivalent") herein refers to the ratio of the content of a component or substance to an oil-and-fat content in a composition or a fraction, calculated with the oil-and-fat content as the denominator and the content of the component or substance as the numerator. Higher values are obtained in terms of "oil-and-fat mass basis" for compositions with relatively low oil and fat contents and relatively high contents of the relevant component or substance. For example, when a composition has an oil-and-fat content of 1 mass % and a hexanal content of 1 ppb in terms of wet mass basis, the hexanal content in the composition in terms of oil-and-fat mass basis is 100 ppb. Unless otherwise specified, the term "hexanal content" herein refers to the content of hexanal in terms of oil-and-fat mass basis.

Specifically, the lower limit for the hexanal content in the ingredient fraction A in terms of oil-and-fat mass basis may preferably be usually 1 ppb or higher, preferably 5 ppb or higher, more particularly 10 ppb or higher, still particularly 15 ppb or higher, or 20 ppb or higher, or 30 ppb or higher, or 40 ppb or higher, or 50 ppb or higher, or 100 ppb or higher, or 300 ppb or higher, especially 500 ppb or higher. However, if the hexanal content is too high, its aroma may be too noticeable. Accordingly, the upper limit may preferably be usually 15000 ppb or lower, particularly 10000 ppb or lower, more particularly 8000 ppb or lower, still particularly 7000 ppb or lower, or 6000 ppb or lower, or 5000 ppb or lower, or 4000 ppb or lower, or 3000 ppb or lower, especially 2000 ppb or lower. The principle is not clear, but the oil-and-fat content may serve to maintain hexanal, which is not miscible with water, in the fraction A and to thereby prevent it from leaking out.

Although not restricted, the liquid seasoning of the present invention may preferably be characterized in that the hexanal content in the ingredient fraction A in terms of dry mass basis is usually 1 ppb or higher. The lower limit for the hexanal content may preferably be particularly 5 ppb or higher, more particularly 10 ppb or higher, still particularly 15 ppb or higher, or 20 ppb or higher, or 30 ppb or higher, or 40 ppb or higher, or 50 ppb or higher, or 100 ppb or higher, or 300 ppb or higher, especially 500 ppb or higher. However, if the hexanal content is too high, its aroma may be too noticeable. Therefore, the upper limit may preferably be usually 15000 ppb or lower, particularly 10000 ppb or lower, more particularly 8000 ppb or lower, still particularly 7000 ppb or lower, or 6000 ppb or lower, or 5000 ppb or lower, or 4000 ppb or lower, or 3000 ppb or lower, especially 2000 ppb or lower. The term "dry mass basis" (or "dry mass equivalent") herein refers to the ratio of the content of a component or substance to the dry mass of a composition or a fraction, calculated with the dry mass of the composition or fraction (in the case described below, the dry mass of the insoluble dietary fiber-localized part) as the denominator and the content of the component or substance (in the case described below, the dry mass of the insoluble dietary fiber) as the numerator.

### *DMDS content in fraction B in terms of wet mass basis:

The liquid seasoning of the present invention may contain dimethyl disulfide (CAS.No.624-92-0, also referred to as DMDS) in the ingredient fraction B at a specific amount. This is desirable because it prevents the formation of characteristic off-flavors due to the ingredients contained in the fraction B, which are relatively small in size and prone to thermal convection. Specifically, the DMDS content in the fraction B in terms of wet mass basis may preferably be 0.01 ppb or higher, preferably 0.05 ppb or higher, more particularly 0.1 ppb or higher, still particularly 0.5 ppb or higher, or 1.0 ppb or higher, or 1.2 ppb or higher, or 1.5 ppb or higher, or 1.8 ppb or higher, or 2.0 ppb or higher, or 2.2 ppb or higher, especially 2.5 ppb or higher. However, if the DMDS content is too high, its aroma may be too noticeable. Therefore, the upper limit may preferably be usually 1000 ppb or lower, particularly 900 ppb or lower, more particularly 800 ppb or lower, still particularly 700 ppb or lower, or 600 ppb or lower, or 500 ppb or lower, or 400 ppb or lower. Unless otherwise specified, the term "DMDS content" herein refers to the content in terms of wet mass basis.

### *(Hexanal in fraction A)/(hexanal in fraction B) ratio:

The liquid seasoning of the present invention may preferably be characterized in that the mass ratio of the hexanal content in the ingredient fraction A in terms of oil-and-fat mass basis to the hexanal content in the ingredient fraction B in terms of oil-and-fat mass basis (hereinafter also referred to as the "(hexanal in fraction A)/(hexanal in fraction B) ratio") exceeds a predetermined value. This is desirable because it allows effective suppression of off-flavors even when some of the off-flavor components generated in the fraction A leaked into the fraction B. Specifically, the lower limit for the (hexanal in fraction A)/(hexanal in fraction B) ratio may preferably be usually higher than 1.0, preferably higher than 1.2, more particularly higher than 1.5, still particularly higher than 2.0, or higher than 2.5, or higher than 3.0, or higher than 4.0, or higher than 5.0, or higher than 6.0, or higher than 7.0, or higher than 8.0, or higher than 9.0, or higher than 10.0, or higher than 30.0, especially higher than 60.0. On the other hand, the upper limit for the (hexanal in fraction A)/(hexanal in fraction B) ratio is not particularly restricted, but may be usually 100.0 or lower, particularly 90.0 or lower, or 80.0 or lower, or 70.0 or lower.

### *(DMDS in fraction A)/(DMDS in fraction B) ratio:

The liquid seasoning of the present invention may preferably be characterized in that the mass ratio of the DMDS content in the fraction A in terms of wet mass basis to the DMDS content in the fraction B in terms of wet mass basis (hereinafter also referred to as the "(DMDS in fraction A)/(DMDS in fraction B) ratio") is below a predetermined upper limit. This is desirable because it allows effective suppression of off-flavors even when some of the off-flavor components generated in the fraction B leaked into the fraction A. Specifically, the (DMDS in fraction A)/(DMDS in fraction B) ratio may preferably be usually lower than 1.0, particularly lower than 0.95, more particularly lower than 0.90, still particularly lower than 0.85, or lower than 0.80, especially lower than 0.75. On the other hand, the lower limit is not particularly restricted, but may be usually 0.01 or higher, particularly 0.02 or higher, or 0.03 or higher, or 0.04 or higher, especially 0.05 or higher.

### * DMTS content fraction B in terms of wet mass basis:

The liquid seasoning of the present invention may preferably be characterized by containing dimethyl trisulfide (CAS.No.3658-80-8, dimethyl trisulfide, also referred to as DMTS) in the ingredient fraction B at a predetermined ratio or higher, since this may serve to suppress the formation of off-flavors in the fraction B further. Specifically, the DMTS content in the fraction B in terms of wet mass basis may preferably be usually 0.01 ppb or higher, particularly 0.05 ppb or higher, more particularly 0.1 ppb or higher, still particularly 0.5 ppb or higher, or 1.0 ppb or higher, or 1.2 ppb or higher, or 1.5 ppb or higher, or 1.8 ppb or higher, or 2.0 ppb or higher, or 2.2 ppb or higher, especially 2.5 ppb or higher. However, if the DMTS content is too high, its aroma may be too noticeable. Accordingly, the upper limit may preferably be usually 3000 ppb or lower, particularly 2000 ppb or lower, more particularly 1500 ppb or lower, still particularly 1200 ppb or lower, or 1000 ppb or lower, or 900 ppb or lower, or 800 ppb or lower, or 700 ppb or lower, or 600 ppb or lower, or 500 ppb or lower, or 300 ppb or lower. Unless otherwise specified, the "DMTS content" herein refers to the content in terms of wet mass basis.

### *PFPD peak area ratio β/α:

The liquid seasoning of the present invention may preferably be further characterized in that when the ingredient fraction A is separated by one-dimensional GC/MS analysis and the separated ingredients are subjected to measurement using Pulsed Flame Photometric Detection (PFPD), the ratio (β/α) of a PFPD peak area β, where m/z = 61 and 90 are both detected in an interval with retention times of from 13 to 18 minutes (which corresponds to the PFPD peak at the DMDS retention times), to a PFPD peak area α, where m/z = 45, 79, and 94 are all detected in an interval with retention times of from 8 to 11 minutes (which is deemed to correspond to the peak of the ingredients originating from the edible plant in the fraction A, although the details are unknown), (hereinafter also referred to as "PFPD peak area ratio β/α," "peak area ratio β/α," or "β/α") is adjusted to within a predetermined range, since this may serve to mask the odor of DMDS, and make the ingredients more palatable. Specifically, the lower limit for the peak area ratio β/α may preferably be usually 0.01 or higher, particularly 0.05 or higher, more particularly 0.1 or higher, still particularly 0.3 or higher, or 0.5 or higher, or 0.8 or higher, or 1.0 or higher, or 1.5 or higher, or 2.0 or higher, or 3.0 or higher, or 4.0 or higher, or 5.0 or higher, especially 6.0 or higher. On the other hand, the upper limit for the peak area ratio β/α may preferably be usually lower than 1000, particularly lower than 800, still particularly lower than 600, more particularly lower than 400, or lower than 200, or lower than 100, or lower than 50.

### *Solid phase microextraction-gas chromatograph mass spectrometry:

In the present invention, the content of hexanal in each ingredient fraction A and B can be determined by solid-phase microextraction-gas chromatography-mass spectrometry (hereinafter also referred to as "SPME-GC-MS" or "SPME") according to the established methods.

The solid phase microextraction -gas chromatograph mass spectrometry is a method in which a measurement sample is adsorbed by the solid phase micro extraction (SPME) method (a static extraction method in which fibers are exposed to the gas phase and volatile components are collected on an adsorbent), followed by gas chromatography mass spectrometry (GS/MS). According to a specific example of the procedure, a small amount (1 g) of sample is measured into a 10-mL flat-bottomed vial, sealed, adsorbed with an adsorption resin (SPME fiber) according to the nature of the volatile components in the sample, and then introduced into a gas chromatography analysis system for analysis after processing using a heat desorption system. In order to measure the content of a component in a sample, the sample and a standard sample diluted to a desired content can be analyzed, the confirmatory ion peak area values of both samples are ascertained, and the values are compared to determine the content of the relevant component in the sample.

After the above analysis, a portion of the sample is run through a mass spectrometer to obtain a mass spectrum and confirm the retention time of each component with the related ions of hexanal (m/z = 56, 57, 72). A quadrupole type 7000C Mass Selective Detector (Agilent) is used as the mass spectrometer (MS). Ionization is performed under the following conditions: ionization method: EI+, ionization voltage: 70 eV. Results are captured in scan mode, and mass spectral analysis can be performed by identifying the ions characteristic of hexanal (m/z = 56, 57, 72) using them as related ions. By identifying the retention time at which all of these related ions are detected in the standard, the retention time of hexanal can be identified. The measurement application software used may be, for example, Unknowns Analysis (MassHnter Workstation Software Quantitative Analysis, version: B.09.00, build: 9.0.647.0, manufactured by Agilent Inc.).

Specifically, solid phase microextraction-gas chromatograph mass spectrometry is carried out under the following conditions.

### <Solid phase microextraction conditions>

*SPME fiber: StableFlex 50/30µm, DVB/Carboxen/PDMS (SUPELCO)
*Volatile ingredient extraction device
PAL3 RSI120 (CTC Analytics)
Preliminary heating: 80 °C, 15 minutes
Agitation rate: 300 rpm
Volatile ingredient extraction: 80 °C, 20 minutes
Desorption time: 10 minutes

### <Gas chromatograph conditions>

*Measurement instrument: Agilent 7980B GC System (Agilent Technologies)
*GC column: DB-WAX (Agilent Technologies) length 30m, caliber 0.25 mm, membrane thickness 0.25 µm
*Carrier: He gas, gas flow rate 1.0mL/min (constant flow)
*Temperature condition: [40 °C (3 min)] - [10 °C/min] - [250 °C (10 min)]

### <Mass spectrometry conditions>

*Measurement instrument: Agilent 7000C GC/MS Triple Quad (Agilent Technologies)
*Ionization method: EI (ionization voltage 70eV)
*Scan mass: m/z 29.0 to 350.0

### *DHS-GC/MS analysis:

In the present invention, the content of each component such as hexanal, DMDS, DMTS, etc. in each of the ingredient fractions A and B can be determined by dynamic headspace-gas chromatography mass spectrometry (hereinafter also referred to as "DHS-GC/MS") and pulsed flame photometric detection (PFPD) according to the established methods.

Specifically, samples of the ingredient fractions A and B obtained by the aforementioned methods are processed (usually at 1000 rpm for about 15 seconds) using, e.g., a small Hiscotron (homogenizer NS-310E3 manufactured by Microtech-Nithion) until they reach a porridge-like consistency, and then subjected to analysis by the DHS-GC/MS and PFPD methods.

According to the DHS-GC/MS method, a measurement sample is volatilized by the DHS (dynamic headspace) method (a dynamic extraction method in which volatile components in the gas phase are forcibly purged with inert gas and collected on an adsorbent), followed by measurement by gas chromatography mass spectrometry (GS/MS). The same method is also used to analyze other components. As a specific procedure, for example, a small amount (1 g) of sample is measured out into a 10-mL flat-bottomed vial, sealed, and volatilized by nitrogen gas purge, then the sample is adsorbed by an adsorption resin (Tenax column) according to the nature of the analyzed component, and processed using a heat desorption system to introduce the sample into gas chromatography analyzer for analysis. In order to measure the content of a component in a sample, the sample and a standard sample diluted to an arbitrary content are analyzed, the integral results of the confirmatory ion peak area or PFPD peak area of both samples can be ascertained, and the values can be compared to determine the relevant component content in the sample.

After the above analysis, a portion of the sample is run through a mass spectrometer to obtain a mass spectrum, and the retention time of each component is checked with the related ions of each component (DMDS: m/z = 45, 79, 94; hexanal: m/z = 56, 57, 72; DMTS: m/z = 79, 111, 126). A quadrupole type 5977B Mass Selective Detector (Agilent) is used as the mass spectrometer (MS). Ionization is performed under the following conditions. Ionization method: EI+, ionization voltage: 70 eV, and results are captured in scan mode, and ions characteristic of each component (DMDS: m/z = 45, 79, 94; hexanal: m/z = 56, 57, 72; DMTS: m/z = 79, 111, 126) are used as related ions for identification by mass spectrometry. The retention times of hexanal, DMDS, and DMTS can be identified by identifying the retention times at which all of these related ions are detected in the standard.

The term "m/z" herein refers to the value detected in the range of -0.3 to +0.7 at the m/z center value of each component. For example, m/z = 45 represents the cumulative value of ion peaks detected between 44.7 and 45.7.

Specifically, DHS-GC/MS analysis are carried out under the following conditions. This analysis may be referred to as "one-dimensional GC/MS analysis" in contrast to the two-dimensional GC/MS analysis described below.

### [GC/MS conditions]

(Dynamic head space (dynamic headspace: DHS) injection method)
*Instrument: Agilent 7890B (GC), 5977B (MS)
   Gester MultiPurpose Sampler (auto-sampler)
*Absorption resin: TENAX
*Incubation temperature: 80 °C
*Nitrogen gas purge amount: 60mL
*Nitrogen gas purge flow rate: 10mL/minute
*TDU: [30 °C] - [210 °C/minute] - [240 °C (3 minutes)]
*CIS: [10 °C] - [12 °C /second] - [240 °C]

### (Liner filler: TENAX)

*Column: Gester DB-WAX (length: 30m x caliber: 250µm x membrane thickness: 0.25µm)
*Column temperature: [40 °C (3 minutes)]-[5 °C/minute]-[240 °C (7 minutes)]
*carrier gas: He
*transfer line: 250 °C
*Ion source temperature: 230 °C
*Scan parameter: m/z = 28.7 to 300
*Split: none

### *Pulsed Flame Photometric Detection (PFPD) method:

A portion of the sample is subjected to the pulsed flame photometric detection (PFPD) method to analyze the sulfur compounds in the sample, whereby very low content sulfur-containing compounds (DMDS, DMTS, etc.) in the sample can be detected. The PFPD-based analysis can be performed using a pulsed flame photometric detector. Any common pulsed flame photometric detector can be used, an example being the OI Analytical 5380 Pulsed Flame Photometric Detector (OI Analytical, Inc.). Samples can be analyzed in S-mode (conditions optimized for sulfur).

Under the conditions described above, known amounts of DMDS (CAS No. 624-92-0, Tokyo Kasei Kogyo, product code: D0714) and DMTS (CAS No. 3658-80-8, Fujifilm Wako Pure Chemical Industries, product code: 327-41221) are added to the sample and diluted to an appropriate concentration in water. The pulse-type flame photometric detector can selectively detect only sulfur compounds by burning a substance in a reducing hydrogen flame and detecting the light at a specific wavelength of 394 nm that is generated during the combustion, and can detect even extremely small amounts of sulfur components. Its high selectivity can also be used to detect extremely small amounts of sulfur compounds. The high-sensitivity sulfur detection capability of the pulse flame photometer (comparison of the distributions of the relevant ions ((DMDS: m/z = 45, 79, 94; hexanal: m/z = 56, 57, 72; DMTS: m/z = 79, 111, 126) between the measured sample and the standard sample makes it possible to determine the retention time at which both relevant ions are significantly detected as the retention time of each component) can be combined with qualitative analysis based on the mass spectral pattern of the mass spectrometer and discrimination by aroma characteristics using odorant scent analysis, whereby the peak near the retention time minute 9.5 can be determined as DMDS, the peak near the retention time minute 11.5 as hexanal, and the peak near the retention time minute 18.5 as DMTS..

Under the conditions described above, standard samples of DMDS, hexanal (CAS. No. 66-25-1, Tokyo Kasei Kogyo, product code: H0133) and DMTS with known contents are diluted in distilled water to appropriate contents and subjected to analysis along with the measurement sample. Although analysis based on the mass spectral pattern by a mass spectrometer may show some deviations depending on the measurement conditions, a component in the measurement sample can be quantified based on the comparison with the retention time of the standard sample, by comparing the amounts of confirmatory ions (DMDS: m/z = 94, hexanal: m/z = 72, DMTS: m/z = 126) and the peak area integration results of the PFPD between the diluted samples and the measurement sample around the retention time of the peak that is thought to be the target component (e.g., DMDS: around retention time 8 to 11 minutes; hexanal: around retention time 8 to 13 minutes; DMTS: around retention time 16 to 24 minutes).

It is particularly desirable to perform one-dimensional GC/MS analysis under the above conditions, heart-cut around the retention time of the peak that is thought to be the target component (e.g., DMDS: around retention time 8 to 11 minutes; hexanal: around retention time 8 to 13 minutes; DMTS: around retention time 16 to 24 minutes), and perform two-dimensional gas chromatography on a column of different properties, since it is possible to more precisely quantify the content of the target component. Specifically, two-dimensional gas chromatography analysis can be performed under the following conditions. In this regard, the retention time in the two-dimensional GC/MS analysis may be different from that in the one-dimensional GC/MS analysis, since it is calculated with the column temperature rise start point as 0 minutes. However, the retention time can be determined by comparing the analysis results with those of the standard product.

### [Two-dimensional GC/MS conditions]

*CTS: [-150 °C]-[10 °C / seconds]-[250 °C]
*Column: Gester DB-5 (length: 10 m x caliber: 180 µm x membrane thickness: 0.4 µm)
*Column temperature: [40 °C (0 minute)] - [40 °C/ minute] - [240 °C (15 minutes)]
*Carrier gas: He

### *Origins of hexanal, DMDS, and DMTS:

DMDS herein may be contained in food materials such as edible plants that are used as raw materials for the liquid seasoning of the present invention, may be added separately from such food materials, or may be generated in the production of the liquid seasoning of the present invention. The total amount of their combination may only have to satisfy the contents and/or ratios mentioned above. When added separately from food materials, DMDS may be contained in any composition or may be a highly pure reagent that has been purified and extracted. The same also applies to hexanal and DMTS.

### *Diameter of particles in fraction B:

The liquid seasoning of the present invention may preferably satisfy the following specific requirements for various parameters related to the particle size of fine particle composites and fine particles contained in the fraction B before and after disturbance, i.e., mode particle diameter, maximum particle diameter, and d₅₀ of particle diameter. Specifically, in the undisturbed state (i.e., before sonication), the liquid seasoning of the present invention contains a large number of fine particle composites. On the other hand, after disturbed (i.e., after sonication), some or all of the fine particle composites disintegrate to form discrete fine particles. Therefore, various parameters related to particle size, such as the maximum particle size and d₅₀ of the particle size, as well as the mode particle size, change significantly before and after disturbance. In measuring the characteristics of the fine particle composites and fine particles contained in the fraction B, the fraction B obtained by the aforementioned method can be used as a sample and measured using the laser diffraction particle size distribution analyzer described below to determine their characteristics.

The mode particle size (modal diameter) of the fine particle composites after disturbance (i.e., after sonication) in the fraction B of the present invention may preferably be adjusted to within a predetermined range. Specifically, the mode particle diameter of the fraction B after disturbance may preferably be usually 1000 µm or smaller, particularly 900 µm or smaller, more particularly 800 µm or smaller, still particularly 700 µm or smaller, or 600 µm or smaller, or 500 µm or smaller, or 400 µm or smaller, or 300 µm or smaller, or 200 µm or smaller. The lower limit is not especially restricted, but may preferably be usually 0.3 µm or larger, particularly 1.0 µm or larger, more particularly 3.0 µm or larger, still particularly 5.0 µm or larger, still particularly 6.0 µm or larger, especially 7.0 µm or larger. When the fraction B contains micronized insoluble dietary fiber-localized parts (especially tomato seeds and/or peels) as described below, it is desirable to sufficiently micronize the insoluble dietary fiber-localized parts, which are composed of hard tissue, to sizes within a predetermined range to improve mouthfeel.

The mode particle diameter (modal diameter) of fine particle composites in the fraction B according to the present invention before disturbance (i.e., before ultrasonication) may preferably be adjusted to within a predetermined range. Specifically, from the viewpoints that the quality of the product is less prone to water loss, the effect of improved feeding is maintained, and the product can be distributed commercially, the mode particle diameter of the liquid seasoning of the present invention before disturbance may preferably be usually 900 µm or smaller, more particularly 800 µm or smaller, still particularly 700 µm or smaller, or 600 µm or smaller, or 500 µm or smaller, or 400 µm or smaller, or 300 µm or smaller, or 200 µm or smaller. The lower limit is not especially restricted, but may preferably be usually 5 µm or larger, particularly 10 µm or larger, more particularly 12 µm or larger.

The "mode particle diameter" herein refers to the particle size of the channel with the largest particle frequency % with respect to the particle size distribution in terms of channels as obtained by measuring the object to be measured using a laser diffraction particle size analyzer. If there are multiple channels with exactly the same particle frequency %, the particle diameter of the channel with the smallest particle size among them is used. If the particle size distribution is a Gaussian distribution, the mode particle diameter is equal to the median diameter, while if the particle size distribution is biased, especially if there are multiple peaks in the particle size distribution, then the mode particle diameter and the median diameter may differ significantly. Measurement of the particle size distribution of a sample using a laser diffraction particle size analyzer can be performed, for example, by the method explained later.

The maximum particle size of the undisturbed fine particulate composites in the fraction B of the present invention may preferably be adjusted to within a predetermined range. Specifically, from the viewpoint that it is possible to prevent the destruction of the food's tissue and the imparting of undesirable flavors, the maximum particle size of the liquid seasoning of the present invention before disturbance (i.e., before ultrasonication) may preferably be usually 30 µm or larger, more particularly 100 µm or larger, more particularly 200 µm or larger, particularly 300 µm or larger, particularly 400 µm or larger, particularly 500 µm or larger, particularly 600 µm or larger, particularly 700 µm or larger, particularly 800 µm or larger, particularly 900 µm or larger. On the other hand, the maximum particle size of the fraction B before disturbance is not restricted, but may preferably be usually 2000 µm or smaller, particularly 1800 µm or smaller. From the viewpoint of industrial productivity, it is convenient to keep the maximum particle size before disturbance to the aforementioned upper limit or smaller. In particular, when crushed insoluble dietary fiber localizing-portions of edible plants (especially tomato seeds and/or peels) described below are contained in the fraction B, the maximum particle diameter of the undisturbed fine particle composites in the fraction B may be equal to or greater than the upper limit described above, because some larger tissues remain even if the portions are thoroughly micronized. Even in such a case, however, the liquid seasoning may preferably have a good texture by adjusting the modal diameter of the fine particle composites after disturbance in the fraction B and the d₅₀ of the particle diameter after disturbance in the fraction B described below to be within a predetermined range.

The maximum particle size of the fine particle composites after disturbance in the fraction B according to the present invention may also preferably be adjusted to within a predetermined range. Specifically, from the viewpoint of sufficiently breaking down the tissue of the food materials and prevent undesirable flavors from being imparted, the maximum particle diameter of the liquid seasoning of the present invention after disturbance (i.e., after ultrasonication) may preferably be usually 30 µm or larger, more particularly 100 µm or larger, more particularly 200 µm or larger, particularly 300 µm or larger, particularly 400 µm or larger, particularly 500 µm or larger, particularly 600 µm or larger, particularly 700 µm or larger, particularly 800 µm or larger, particularly 900 µm or larger. On the other hand, the maximum particle diameter of the fraction B after disturbance is not restricted, but may preferably be usually 1900 µm or smaller, particularly 1700 µm or smaller. From the viewpoint of industrial productivity, it is convenient to keep the maximum particle size after disturbance to the aforementioned upper limit or smaller.

In addition to the mode particle diameter and the maximum particle diameter described above, the d₅₀ (50% integrated diameter, median particle diameter, median diameter) of the particle sizes of fine particle composites in the fraction B before and after disturbance according to the present invention may also preferably be adjusted to within specified ranges. Specifically, the d₅₀ of the particle sizes of the fraction B according to the present invention before disturbance (i.e., before ultrasonication) may preferably be usually 1000 µm or smaller, particularly 900 µm or smaller, more particularly 800 µm or smaller, still particularly 700 µm or smaller, or 600 µm or smaller, or 500 µm or smaller, or 400 µm or smaller, or 300 µm or smaller, or 200 µm or smaller. The lower limit is not especially restricted may preferably be, but usually 5 µm or larger, particularly 10 µm or larger. When the fraction B contains micronized insoluble dietary fiber-localized parts (especially tomato seeds and/or peels) as described below, it is desirable to sufficiently micronize the insoluble dietary fiber-localized parts, which are composed of hard tissue, to sizes within a predetermined range to improve mouthfeel.

On the other hand, the d₅₀ of particle diameters of the fraction B according to the present invention after disturbance may preferably be usually 900 µm or smaller, particularly 800 µm or smaller, more particularly 700 µm or smaller, still particularly 600 µm or smaller, or 500 µm or smaller, or 400 µm or smaller, or 300 µm or smaller, or 200 µm or smaller. The lower limit is not especially restricted, but may preferably be usually 1 µm or larger, particularly 5 µm or larger, more particularly 7 µm or larger. The d₅₀ of particle diameters is defined as the particle diameter where when the particle size distribution is divided into two parts at that particle diameter, the ratio of the cumulative value of the larger particle frequency % to the cumulative value of the smaller particle frequency % is 50:50. The d₅₀ of particle diameter can be measured, for example, using a laser diffraction particle size analyzer as described below.

Unless otherwise specified, the term "particle diameter" herein means the value measured on a volume basis. Unless otherwise specified, the term "particle" herein encompasses not only discrete fine particles but also fine particle composites formed as agglomerates of such fine particles.

The measurement of particle size distribution of a protease- and amylase-treated composition after ultrasonic treatment shall be performed using a laser diffraction particle size analyzer according to the following conditions. Ethanol is used as the solvent for the measurement, which has little effect on the structure of the composition. The laser diffraction particle size analyzer used for the measurement is not limited to any particular type, an example being Microtrac MT3300 EXII system marketed by Microtrac Bell Inc. The measurement application software used for the measurement is not limited, an example being DMS2 (Data Management System version 2, Microtrac Bell Inc.). When the device and the application software mentioned above are used, the measurement can be carried out by: carrying out cleaning by pressing the Wash button of the software; carrying out calibration by pressing the Set Zero button of the software; and directly loading the sample via the Sample Loading feature until the sample concentration is within the proper range. After the sample is loaded, the measurement sample is subjected to ultrasonic treatment by the measurement device, followed by measurement. Specifically, a sample that has not been subjected to ultrasonic treatment is put into the measurement solvent (ethanol) circulating in the measurement system, the concentration is adjusted to within the appropriate range using the Sample Loading feature, and then the ultrasonic treatment is performed by pressing the Ultrasonic Treatment button of the software. Then, after three times of defoaming, the sample loading can be carried out again to adjust the concentration to within the appropriate range. Thereafter, the sample is promptly laser diffracted at a flow rate of 60% with a measurement time of 10 seconds, and the result is used as the measurement value. The parameters for the measurement may be, e.g., Distribution indication: Volume; Particle refractive index: 1.60; Solvent refractive index: 1.36; Upper limit of measurement: 2,000.00 µm; Lower limit of measurement: 0.021 µm.

Unless otherwise specified, the present invention assumes ultrasonication as a typical example of an external disturbance that causes the fine particle composites to break up. The term "ultrasonication" herein refers to, unless otherwise specified, the application of ultrasonic waves with a frequency of 40 kHz at an output of 40 W to the sample to be measured for 3 minutes.

When determining various particle diameters in the present invention, it is preferable to measure the particle size distribution in terms of channels (CH), and then use the particle diameter for each measurement channel listed in Table 2 below as a standard. Specifically, according to Table 2 below, the frequency of particles that are smaller than the particle diameter specified for each channel and larger than the particle diameter specified for the channel with one number larger (for the largest channel in the measurement range, the particle diameter of the lower limit) is measured for each channel in Table 2 below, and the total frequency for all channels in the measurement range is used as the denominator to obtain the particle frequency % for each channel (also referred to as "particle frequency % for XX channel"). For example, the particle frequency % of channel 1 represents the frequency % of particles of 2000.00 µm or smaller but larger than 1826.00 µm. In particular, the maximum particle diameter can be determined as the particle diameter of the channel with the largest particle diameter among the channels in which the particle frequency % was found for the results obtained by measuring the particle frequency % in each of the 132 channels in Table 2 below. In other words, when various particle sizes are measured in the present invention using a laser diffraction particle size analyzer, the preferred measurement conditions are ethanol as the measurement solvent, an upper measurement limit of 2000.00 µm and a lower measurement limit of 0.021 µm, and the particle size is measured immediately after the sample is fed.

**[Table 1]**

| Channel | Particle size (µm) | Channel | Particle size (µm) | Channel | Particle size (µm) | Channel | Particle size (µm) |
|---|---|---|---|---|---|---|---|
| 1 | 2000.000 | 37 | 88.000 | 73 | 3.889 | 109 | 0.172 |
| 2 | 1826.000 | 38 | 80.700 | 74 | 3.566 | 110 | 0.158 |
| 3 | 1674.000 | 39 | 74.000 | 75 | 3.270 | 111 | 0.145 |
| 4 | 1535.000 | 40 | 67.860 | 76 | 2.999 | 112 | 0.133 |
| 5 | 1408.000 | 41 | 62.230 | 77 | 2.750 | 113 | 0.122 |
| 6 | 1291.000 | 42 | 57.060 | 78 | 2.522 | 114 | 0.111 |
| 7 | 1184.000 | 43 | 52.330 | 79 | 2.312 | 115 | 0.102 |
| 8 | 1086.000 | 44 | 47.980 | 80 | 2.121 | 116 | 0.094 |
| 9 | 995.600 | 45 | 44.000 | 81 | 1.945 | 117 | 0.086 |
| 10 | 913.000 | 46 | 40.350 | 82 | 1.783 | 118 | 0.079 |
| 11 | 837.200 | 47 | 37.000 | 83 | 1.635 | 119 | 0.072 |
| 12 | 767.700 | 48 | 33.930 | 84 | 1.499 | 120 | 0.066 |
| 13 | 704.000 | 49 | 31.110 | 85 | 1.375 | 121 | 0.061 |
| 14 | 645.600 | 50 | 28.530 | 86 | 1.261 | 122 | 0.056 |
| 15 | 592.000 | 51 | 26.160 | 87 | 1.156 | 123 | 0.051 |
| 16 | 542.900 | 52 | 23.990 | 88 | 1.060 | 124 | 0.047 |
| 17 | 497.800 | 53 | 22.000 | 89 | 0.972 | 125 | 0.043 |
| 18 | 456.500 | 54 | 20.170 | 90 | 0.892 | 126 | 0.039 |
| 19 | 418.600 | 55 | 18.500 | 91 | 0.818 | 127 | 0.036 |
| 20 | 383.900 | 56 | 16.960 | 92 | 0.750 | 128 | 0.033 |
| 21 | 352.000 | 57 | 15.560 | 93 | 0.688 | 129 | 0.030 |
| 22 | 322.800 | 58 | 14.270 | 94 | 0.630 | 130 | 0.028 |
| 23 | 296.000 | 59 | 13.080 | 95 | 0.578 | 131 | 0.026 |
| 24 | 271.400 | 60 | 12.000 | 96 | 0.530 | 132 | 0.023 |
| 25 | 248.900 | 61 | 11.000 | 97 | 0.486 | | |
| 26 | 228.200 | 62 | 10.090 | 98 | 0.446 | | |
| 27 | 209.300 | 63 | 9.250 | 99 | 0.409 | | |
| 28 | 191.900 | 64 | 8.482 | 100 | 0.375 | | |
| 29 | 176.000 | 65 | 7.778 | 101 | 0.344 | | |
| 30 | 161.400 | 66 | 7.133 | 102 | 0.315 | | |
| 31 | 148.000 | 67 | 6.541 | 103 | 0.289 | | |
| 32 | 135.700 | 68 | 5.998 | 104 | 0.265 | | |
| 33 | 124.500 | 69 | 5.500 | 105 | 0.243 | | |
| 34 | 114.100 | 70 | 5.044 | 106 | 0.223 | | |
| 35 | 104.700 | 71 | 4.625 | 107 | 0.204 | | |
| 36 | 95.960 | 72 | 4.241 | 108 | 0.187 | | |

### *Specific surface area of particles in the composition:

The liquid seasoning of the present invention may preferably be characterized in that in addition to the various requirements mentioned above, the specific surface area per unit volume [m²/mL] of the particles (fine particles and fine particle composites) in the fraction B before or after disturbance (i.e., before and after sonication) satisfies the following requirements. Specifically, the liquid seasoning of the present invention contains a large number of fine particle composites in the undisturbed state (i.e., before sonication), and retains its structure even after disturbance (i.e., after ultrasonication). Accordingly, it may be preferable that the specific surface area per unit volume [m²/mL] does not change significantly between before and after disturbance.

Specifically, the specific surface area per unit volume (γB) of particles (fine particles and fine particle composites) in the fraction B before applying disturbance (i.e., before ultrasonication) may preferably be usually 1.00m²/mL or smaller, particularly 0.90m²/mL or smaller, particularly 0.80m²/mL or smaller. The specific surface area (γB) being below the aforementioned upper limit is preferable because the fine particles sufficiently form composites, whereby the effect of the present invention in improving storage stability is fully realized. The lower limit for the specific surface area (γB) is not restricted, but may preferably be usually 0.01m²/mL or larger, particularly 0.02m²/mL or larger, particularly 0.03m²/mL or larger.

The specific surface area per unit volume (γA) of particles (fine particles and fine particle composites) in the fraction B after applying disturbance (i.e., after ultrasonication) may preferably be usually 1.00m²/mL or smaller, particularly 0.90m²/mL or smaller, particularly 0.80m²/mL or smaller. The specific surface area (γA) being below the aforementioned upper limit is preferable because the fine particles sufficiently form composites, whereby the effect of the present invention in improving storage stability is fully realized. The lower limit for the specific surface area (γA) is not restricted, but may preferably be usually 0.01m²/mL or larger, particularly 0.02m²/mL or larger, particularly 0.03m²/mL or larger.

The ratio of the specific surface areas per unit volume [m²/mL] of the particles (fine particles and fine particle composites) in the fraction B before and after applying disturbance (i.e., before and after ultrasonication), i.e., γB/γA f (specific surface area per unit volume before sonication) / (specific surface area per unit volume after sonication)} may preferably satisfy a predetermined range. Specifically, the upper limit for the value of the γB/γA ratio is not restricted, but may preferably be usually 2.00 or lower, particularly 1.50 or lower, more particularly 1.20 or lower, or 1.10 or lower, or 1.05 or lower, especially 1.00 or lower. The lower limit for the γB/γA ratio is not especially restricted, but may preferably be usually 0.80 or higher, particularly 0.85 or higher, more particularly 0.90 or higher, still particularly 0.95 or higher. The γB/γA ratio satisfying the aforementioned range is desirable because it means that dietary fibers moderately form composites with each other, whereby the effect of the invention is properly expressed.

The "specific surface area per unit volume" [m²/mL] herein refers to the specific surface area per unit volume (1 mL) when the particles are assumed to be spherical, as measured using a laser diffraction particle size analyzer. The specific surface area per unit volume [m²/mL] assuming that the particles are spherical is a numerical value based on a different measurement mechanism than the measured values reflecting the composition and surface structure of the particles (e.g., specific surface area per volume and per mass obtained by the permeation method, gas adsorption method, etc.). The specific surface area per unit volume [m²/mL] assuming that the particles are spherical is obtained by setting the surface area per particle as ai and the particle diameter of each particle as di, multiplying the particle diameter (di) for each measurement channel by the surface area (ai) per particle, summing up the multiplied products, and dividing back the sum by the surface area (ai) per particle to calculate the area-averaged diameter (Σ(ai-di)/Σ(ai)), and then calculating 6/(area-averaged diameter), i.e., 6 x Σ(ai) /Σ(ai*di).

### *Oil-and-fat content in fraction B:

The liquid seasoning of the present invention may preferably be characterized by having an oil-and-fat content of a predetermined limit or higher in the fraction B, since this may serve to prevent the generation of off-flavors in the fraction A. The principle behind this is unknown, but the oil-and-fat content may inhibit oxidation reactions, etc., of the ingredients in the fraction A. Specifically, the oil-and-fat content in the fraction B may preferably be usually 2 mass % or higher, particularly 5 mass % or higher, more particularly 8 mass % or higher, still particularly 10 mass % or higher, or 12 mass % or higher, or 15 mass % or higher, or 18 mass % or higher, or 20 mass % or higher, especially 25 mass % or higher. The upper limit is not especially restricted, but may be usually 90 mass % or lower, particularly 80 mass % or lower.

The oil-and-fat content in the fraction B may be contained in the edible plants or other food materials used as raw materials for the liquid seasonings of the present invention, may be added separately from such food materials, or may be generated during the production of the liquid seasonings of the present invention. The total amount of the combination of the oils and fats of these origins may only have to be within the predetermined range mentioned above. When oil is added separately from the food materials, the oil to be added may preferably be vegetable oil or fat, more preferably vegetable oil or fat in liquid form, still more preferably purified vegetable oil or fat. Specifically, cooking oil, olive oil, safflower oil, canola oil, sesame oil, corn oil, shiso oil, soybean oil, benibana (Japanese safflower) oil, rapeseed oil, palm oil, cottonseed oil, egoma (Korean perilla) oil, peanut oil, spice oil, sunflower oil, coconut oil, rice oil (rice bran oil), corn oil, and triglycerides of medium chain fatty acids.

The ratio of the oil-and-fat content derived from fats and oils (especially purified fats and oils) that are added separately from edible plants, etc. used as raw materials for the liquid seasoning to the total oil-and-fat content in the fraction B in terms of dry mass basis may preferably be 30 mass % or higher, more preferably 50 mass % or higher, 70 mass % or higher, more preferably 90 mass % or higher. The upper limit is not especially restricted, but may be usually 100 mass % or lower. The ratio of the content of liquid oils and fats (especially purified fats and oils) to the total oil-and-fat content in the fraction B in terms of dry mass basis may preferably be 30 mass % or higher, more preferably 50 mass % or higher, more preferably 70 mass % or higher, more preferably 90 mass % or higher, more preferably 100 mass %.

As for the method of measuring the fat content in fraction B, it is sufficient to measure the fat content of the fraction B sample collected by the aforementioned method, and the regular method can be used. Examples include a method following the methods described in the "Food Labeling Standards (Cabinet Office Ordinance No. 10, 2015)" and the "Standard Tables of Food Composition in Japan, 2015 Edition (7th Revision), Analysis Manual." Specific examples include the chloroform-methanol mixed solution extraction method or the Soxhlet extraction method

### *Viscosity of fraction B:

The liquid seasoning of the present invention may preferably be characterized in that the viscosity of the fraction B is adjusted to a predetermined limit or higher, since this helps DMDS and other substances that inhibit the formation of off-flavors spread evenly throughout the fraction B and enhance the effects of the invention. Specifically, in the fraction B viscosity (measurement temperature 20 °C) may preferably be 10 mPa·s or higher, more preferably 20 mPa·s or higher, more particularly 30 mPa·s or higher, still particularly 40 mPa·s or higher, or 50 mPa·s or higher, or 60 mPa·s or higher, or 70 mPa·s or higher, or 80 mPa·s or higher, or 90 mPa·s or higher, or 100 mPa·s or higher. The upper limit is not especially restricted, but usually 10000 mPa·s or lower, or 6000 mPa·s or lower, 3000 mPa·s or lower.

In the present invention, when simply referring to "viscosity (measurement temperature: 20°C)," it refers to the value measured by a rotational viscometer, which can be measured according to the standard method using a B-type viscometer (e.g., "B-II" manufactured by Toki Sangyo Co.). When measuring the "viscosity (measurement temperature 20°C)" value of a sample, the sample adjusted to 20°C may be measured with an appropriate rotational speed (6 rpm to 60 rpm) and a rotor (No. 1 to No. 4), with paying attention to the upper limit of measurement, and the reading of the measured value may be multiplied by a conversion multiplier in accordance with the rotor and the rotational speed used. When measuring, the combination of the rotor and the rotational speed may be selected such that the expected viscosity value of the measured sample is near the full scale of the upper measurement limit derived from the rotor and the rotational speed. If viscosity is not known at all, the viscosity can be measured by starting with the measurement setting in the highest viscosity range (No. 4 rotor, rotation speed 6 rpm) and changing to the lower viscosity range settings in turn. For example, with a No. 3 rotor and a rotation speed of 60 rpm, it is possible to measure up to the upper limit of 2000 mPa·s, and the numerical value of "viscosity (measurement temperature: 20°C)" can be determined by multiplying the measured value by 20 as a conversion multiplier.

### *Bostwick viscosity of the seasoning:

The liquid seasoning of the present invention may preferably be characterized in that its flow-down distance as measured with a Bostwick viscometer is adjusted to a predetermined limit or higher, because this may help inhibit mutual leakage of off-flavor components between the fractions A and B. Specifically, the flow-down distance of the liquid seasoning as measured with a Bostwick viscometer (measurement time: 30 seconds, measurement temperature 20 °C) may preferably be 28 cm or less, preferably 22 cm or less, more particularly 15 cm or less. The lower limit is not especially restricted, but may be usually 0.1 cm or more, particularly 1.0 cm or more. According to the present invention, the Bostwick viscosity can be measured using a Bostwick viscometer (in the present invention, using a Bostwick viscometer with a trough length of 28.0 cm and a maximum sample flow distance of 28.0 cm in the trough of the Bostwick viscosity). Specifically, a KO type Bostwick viscometer (Fukaya Tekkosho) is used for measurement. Upon measurement, the instrument is set up horizontally using the instrument's level, the gate is closed, the reservoir is filled to full capacity with a sample temperature adjusted to 20°C, the trigger is pressed down to open the gate while the measurement of time is started simultaneously, and the flow distance of the material in the trough at the time when 30 seconds elapsed is measured.

### *Insoluble dietary fiber-localized part

The liquid seasoning of the present invention may preferably be characterized in that the fraction B contains an insoluble dietary fiber-localized part of an edible plant, because this may help improve the viscosity of the fraction B, and adjust its viscosity (measurement temperature: 20°C) and Bostwick viscosity to predetermined ranges. Specifically, the lower limit for the ratio of the insoluble dietary fiber-localized part content to the total mass of the fraction B in terms of wet mass basis ratio may preferably be 0.1 mass % or higher, more preferably 0.2 mass % or higher, more preferably 0.3 mass % or higher. On the other hand, the upper limit is usually not restricted, but may preferably be 20 mass % or lower, more preferably 10 mass % or lower, more preferably 5 mass % or lower.

The insoluble dietary fiber-localized part in the fraction B may be contained as the purified insoluble dietary fiber-localized part alone or in the form of an insoluble dietary fiber-containing food material containing the insoluble dietary fiber-localized part However, the fraction B may preferably contain both an insoluble dietary fiber localized part and other parts from the same species of food material, more preferably both an insoluble dietary fiber localized part and other parts from the same individual of food material. In this case, the insoluble dietary fiber localized part and the other parts from the same species or same individual of food material may be separated from each other before being added to the liquid seasoning separately, or may be contained in the same food material and added to the liquid seasoning as the food material containing the insoluble dietary fiber localized part and the other parts.

The insoluble dietary fiber localized part herein refers to the portion of a food material that has a relatively higher percentage of insoluble dietary fiber content than the edible portion of the same food material. Specifically, the insoluble dietary fiber localized part may preferably have, in a dry state, an insoluble dietary fiber content of 1.1 times or more, more preferably 1.2 times or more, more preferably 1.3 times or more, more preferably 1.4 times or more, more preferably 1.5 times or more, more preferably 1.6 times or more, more preferably 1.7 times or more, more preferably 1.8 times or more, more preferably 1.9 times or more, most preferably 2.0 times or more of the insoluble dietary fiber content of the edible part. For example, insoluble dietary fiber localized parts of tomatoes include the seeds and/or peel, which have a relatively higher insoluble dietary fiber content than the insoluble dietary fiber content in the edible parts (such as the pulp).

The insoluble dietary fiber localized part of a food material herein may be part of the "edible portion" of the food material (e.g., seeds or skins of cereals, legumes, seeds, and vegetables, (e.g., seeds or skins of cereals, pulse, nuts, and vegetables, especially seeds or skins of vegetables) or part of the "inedible portion" of the food material (e.g., cores of corn, pods of pulse), but may preferably be part of the "edible portion" of the food material. Specifically, the insoluble dietary fiber-localized part may preferably be the skin and/or seeds of vegetables or the squeezed residue of pulse, more preferably the skin and/or seeds of tomatoes (including mini-tomatoes) or the squeezed residue of soybeans (okara).

Typical examples of insoluble dietary fiber localized parts are "discarded parts" of various food materials listed in the Standard Tables of Food Composition in Japan, 2015 Edition (7th Revision) (an example is shown in Table 1). However, other than these "inedible parts," insoluble dietary fiber localized parts are also found in "edible parts," such as the skin and seed parts of the cereals, pulse, nuts, and vegetables, and particularly hard and thick parts of the stems and leaves of vegetables.

The "inedible part" of a food material herein refers to the part of the food material that is not suitable for normal eating or drinking or that is discarded in normal eating habits, and the "edible part" herein refers to the remaining part of the entire food material other than the discarded part (inedible part). The parts and ratios of inedible parts in the food materials used in the present invention, i.e., insoluble fiber-containing food materials and/or other (insoluble fiber-free) food materials, are naturally understood by those skilled in the art of handling such foods and processed food products. For example, it is possible to refer to the "discarded portions" and "discard ratio" listed in Standard Tables of Food Composition in Japan, 2015 Edition (7th Revision), and treat these portions as the portions and ratios of inedible parts, respectively. In addition, the part and ratio of edible part in a food material can be understood from the part and ratio of inedible part in the food material.

The content ratio of insoluble dietary fiber in the insoluble dietary fiber-localized part in terms of dry mass basis may preferably be usually higher than 8 mass %, more preferably higher than 9 mass %, more preferably higher than 10 mass %, more preferably higher than 11 mass %, more preferably higher than 12 mass %, more preferably higher than 13 mass %, more preferably higher than 14 mass %, more preferably higher than 15 mass %, more preferably higher than 16 mass %, more preferably higher than 17 mass %, more preferably higher than 18 mass %, more preferably higher than 19 mass %, more preferably higher than 20 mass %. The upper limit is not especially restricted, but may be usually 50 mass % or lower, or 40 mass % or lower, particularly 30 mass % or lower.

When the liquid seasoning contains insoluble dietary fiber localized part, it may preferably be contained in the state of micronized and processed product, because the viscosity-enhancing effect may thereby be achieved. The principle behind this is unknown, but it is possible that the insoluble dietary fiber may be complexed to produce viscosity.

The insoluble dietary fiber localized part may be isolated before being micronized, or it may be micronized as a food material containing insoluble dietary fiber. However, it is preferable to separate the insoluble dietary fiber localized part, which is difficult to crush, from the other parts of the food material and treat it separately.

The liquid seasoning may preferably contain both a micronized product of insoluble dietary fiber localized part and other parts in the same type of food material. The insoluble dietary fiber localized part may be separated from the food material and micronized before being contained in the fraction B. Alternatively, the food material containing the insoluble dietary fiber localized part may be micronized as a whole and contained in the fraction B.

The means of micronization as a condition for the micronization treatment herein is not particularly limited. The temperature at the time of micronization is also not limited, and can be high-temperature, room-temperature, or low-temperature micronization. The pressure at the time of micronization is also not limited, and may be high, normal, or low pressure. Examples of equipment for micronization include blenders, mixers, mills, kneaders, pulverizers, crushers, and grinders, any of which may be used. Specific examples of equipment include media agitation mills such as dry bead mills and ball mills (rolling, vibrating, etc.), as well as jet mills, high-speed rotating impact mills (pin mills, etc.), roll mills, and hammer mills.

Micronization of insoluble dietary fiber-localized part may preferably be carried out such that the modal diameter of fine particle composites after disturbance is adjusted to within a predetermined range. Specifically, the mode particle diameter after disturbance may preferably be usually 1000 µm or smaller, particularly 900 µm or smaller, more particularly 800 µm or smaller, still particularly 700 µm or smaller, or 600 µm or smaller, or 500 µm or smaller, or 400 µm or smaller, or 300 µm or smaller, or 200 µm or smaller. The lower limit is not especially restricted, but may preferably be usually 0.3 µm or larger, particularly 1.0 µm or larger, more particularly 3.0 µm or larger, still particularly 5.0 µm or larger, still particularly 6.0 µm or larger, especially 7.0 µm or larger.

Micronization of insoluble dietary fiber-localized part may preferably be carried out such that the d₅₀ of diameters of fine particle composites after disturbance is adjusted to within a predetermined range. Specifically, the particle diameter d₅₀ after disturbance may preferably be usually 900 µm or smaller, particularly 800 µm or smaller, more particularly 700 µm or smaller, still particularly 600 µm or smaller, or 500 µm or smaller, or 400 µm or smaller, or 300 µm or smaller, or 200 µm or smaller. The lower limit is not especially restricted, but may preferably be usually 1 µm or larger, particularly 5 µm or larger, more particularly 7 µm or larger.

Micronization of insoluble dietary fiber-localized part may preferably be carried out such that the specific surface area per unit volume of particles (fine particles and fine particle composites) before and after disturbance (i.e., before and after ultrasonication) satisfies the following requirements. The micronized product of insoluble dietary fiber localized part according to the present invention may contain a large number of fine particle composites in the undisturbed state (i.e., before sonication), and retains its structure after disturbance (i.e., after ultrasonication), and therefore its specific surface area per unit volume [m²/mL] does not change significantly before and after disturbance. This allows for the dietary fibers to be firmly complexed with each other, whereby the viscosity-enhancing effect is properly expressed. Specifically, f (specific surface area per unit volume before ultrasonic treatment [m²/mL]) / (specific surface area per unit volume after ultrasonic treatment [m²/mL])} may preferably satisfy a predetermined range. Specifically, the upper limit the ratio for is not restricted, but may preferably be usually 2.00 or lower, particularly 1.50 or lower, more particularly 1.20 or lower, or 1.10 or lower, or 1.05 or lower, especially 1.00 or lower. The lower limit is not particularly restricted, but may preferably be usually 0.80 or higher, particularly 0.85 or higher, more particularly 0.90 or higher, still particularly 0.95 or higher.

The specific surface area per unit volume of particles (fine particles and fine particle composites) in the micronized product of insoluble dietary fiber localized part before and after disturbance may preferably be usually 0.01 [m²/mL] or higher, particularly 0.02 [m²/mL] or higher, particularly 0.03 [m²/mL] or higher. The upper limit is not especially restricted, but may preferably be usually 1.00 [m²/mL] or lower, particularly 0.90 [m²/mL] or lower, particularly 0.80 [m²/mL] or lower.

### *Edible plant:

The liquid seasoning of the present invention contains edible plant. The term "edible plant" herein refers to a type of plant used for human consumption, including its edible and/or inedible parts. Edible plants in the present invention are not restricted in any way as long as they are provided for human consumption, and include vegetables, cereals, mushrooms, fruits, potatoes, algae, nuts, and pulse, of which vegetables, cereals, mushrooms, and fruits are particular. Specifically, it is possible to refer to, e.g., the classifications listed in Standard Tables of Food Composition in Japan, 2015 Edition (7th Revision), Supplement 2018 (the food composition tables established by the Ministry of Health, Labor and Welfare, see especially Table 1 on page 236), especially those of vegetables, cereals, mushrooms, fruits, potatoes, algae, nuts, and pulse, for understanding what food materials qualify as edible plants. These edible plants may be used either any one singly or any two or more in any combination. These edible plants may be used as they are or after various types of processing (e.g., drying, heating, removal of harshness, peeling, seed removal, additional ripening, salting, peel processing, etc.). The classification and specific type (name) of a food material can be determined based on the conditions of the whole plant together with its inedible part.

The liquid seasoning of the present invention may contain only one edible plant species, or may contain two or more edible plant species. When the liquid seasoning of the present invention contain two or more edible plant species, there is no limitation to the combination and ratio of those edible plant species. That is, they may be edible plants belonging to the same classification, or they may be edible plants belonging to two or more different classifications. Each of the ingredient fraction A and the ingredient fraction B may contain only one edible plant species, or may contain two or more edible plant species. When the ingredient fraction A and/or the ingredient fraction B contain two or more edible plant species, there is no limitation to the combination and ratio of those edible plant species.

Each edible plant contained in the liquid seasoning of the present invention or in each ingredient fraction may be present as an ingredient, in a medium, or both as an ingredient and in a medium. The ingredient fraction A and the ingredient fraction B may be composed solely of one or more different species of edible plants, or may contain one or more common species of edible plants in addition to one or more different species of edible plants, or may be composed solely of one or more common species of edible plants. The ingredient fraction A and the ingredient fraction B may preferably contain at least edible plants belonging to the same classification, more preferably edible plants belonging to the same species.

Specific examples of edible plants included in the liquid seasoning of the present invention or each ingredient fraction thereof are described below, but edible plants are not limited to these specific examples and any edible plant can be used.

Examples of edible plant species classified in the category of vegetables include, but are not limited to, daikon radish, carrot, rutabaga, parsnip, turnip, black salsify, lotus root, beet (preferably beet (beetroot): a variety improved to make its root edible), kuwai (arrowhead tuber), shallot, garlic, rakkyo (Japanese scallion), yurine (lily bulb), kale, onion (especially small onion), asparagus, udo (Japanese spikenard), cabbage, lettuce, spinach, Chinese cabbage, Brassica rapa, komatsuna, napa (Chinese cabbage), nira (Chinese chive), negi (Japanese green onion), nozawana (a variation of turnip), fuki (sweet coltsfoot), Swiss chard, mizuna (potherb mustard), tomatoes (including mini-tomatoes, a variation of tomato), eggplant, pumpkin, pepper, cucumber, myoga (Japanese ginger), cauliflower, broccoli, edible chrysanthemum, bitter gourd, okra, artichoke, zucchini, sugar beet, tiger nut, ginger, shiso, wasabi (Japanese horseradish), paprika, herbs (watercress, coriander, kushinsai (water spinach), celery, tarragon, chive, chervil, sage, thyme, laurel, parsley, mustard green (karashina), yomogi (Japanese mugwort), basil, oregano, rosemary, peppermint, savory, lemongrass, dill, wasabina (a variation of turnip), leaves of sansho (Japanese prickly ash), and stevia) warabi (bracken), zenmai (Asian royal fern), and takenoko (bamboo shoot)). Preferable among these include Solanaceae plant (tomato, eggplant), Allium plant (onion, especially small onion), and pumpkin. Each of the above food materials can be used regardless of its edible and inedible parts.

When one or more edible plants classified as vegetables as described above are included in the ingredient fraction A, the total content of the vegetables may preferably be usually more than 50% by mass, especially more than 70% by mass, and even more than 90% by mass, especially substantially 100% by mass, of the total mass of the fraction A, in terms of wet mass basis. The upper limit is not especially restricted, but may be usually 100 mass % or lower of the total mass of the fraction A. When one or more edible plants classified as vegetables as described above are included in the ingredient fraction B, the total content of the vegetables may preferably be usually more than 50% by mass, especially more than 70% by mass, and even more than 90% by mass, especially substantially 100% by mass, of the total mass of the fraction B, in terms of wet mass basis The upper limit is not especially restricted, but may be usually 100 mass % or lower of the total mass of the fraction B. Each of the fraction A and the fraction B may preferably contain one or more same or different vegetable species in the above ratios, more preferably one or more same vegetable species in the above ratios.

According to an embodiment, preferable vegetables include Solanaceae plants, of which tomatoes are preferred. Examples of tomatoes include tomato and/or mini-tomato, a variation of tomato. According to an embodiment, tomatoes include mini-tomatoes (any tomato with a fruit size of 5 to 30 grams, generally called mini-tomatoes, such as Aiko, Carol Passion, Carol 10, Carol Queen, Yellow Carol, Carol Rose, Mini Carol, Yellow Aiko, Orange Carol, Carol 7, Carol Star, Carol Moon, Make Sweets (by Sakata Seeds), Amakko (by Marusei), Angelle (by Zen-Noh), Korokoro (by Syngenta), Sun Grape 108, Sun Cherry Pure (by Tokita Seedling), Jewel Tomato (by Nakahara Seedling), Fruit Ruby EX (by Del Monte Japan), Red Pear, Senka 99, CF Senka, TY Senke (by Takii), CF Kozu (by Mikado Kyowa), TY Hyakko (by Nanto). According to an embodiment, it is preferred that both the fractions A and B contain Solanaceae plants in the above ratios. According to an embodiment, it is preferred that both the fractions A and B contain tomatoes (e.g. tomatoes and/or mini-tomatoes) in the above ratios. According to an embodiment, it is preferred that the fraction A contains mini-tomatoes in the above ratios.

Examples of edible plant species classified as cereals include, but are not limited to, corn (including sweet corn, which is immature corn, and young corn, which is even more immature than sweet corn), rice, wheat, barley, sorghum, oat, triticale, rye, buckwheat, fonio, quinoa, hie (Japanese millet), awa (foxtail millet), giant corn, sugarcane, and amaranth, of which corn (including sweet corn and young corn, which are immature corn) is especially preferred. Each of the above food materials can be used regardless of whether they are edible or inedible parts thereof.

When one or more edible plants classified as cereals as described above are included in the ingredient fraction A, the total content of the cereals may preferably be usually more than 50% by mass, especially more than 70% by mass, and even more than 90% by mass, especially substantially 100% by mass, of the total mass of the fraction A, in terms of wet mass basis. The upper limit is not especially restricted, but may be usually 100 mass % or lower of the total mass of the fraction A. When one or more edible plants classified as cereals as described above are included in the ingredient fraction B, the total content of the cereals may preferably be usually more than 50% by mass, especially more than 70% by mass, and even more than 90% by mass, especially substantially 100% by mass, of the total mass of the fraction B, in terms of wet mass basis The upper limit is not especially restricted, but may be usually 100 mass % or lower of the total mass of the fraction B. Each of the fraction A and the fraction B may preferably contain one or more same or different cereal species in the above ratios, more preferably one or more same cereal species in the above ratios.

Examples of edible plant species classified as mushrooms include, but are not limited to, enokitake mushroom, kikurage mushroom, kuroabatake mushroom, shiitake mushroom, hatake shimeji mushroom (fried chicken mushroom), beech shimeji mushroom, hon shimeji mushroom, tamogi mushroom (golden oyster mushroom), nameko mushroom, numerisugitake mushroom (shaggy scalycap), hiratake mushroom, eringi mushroom, maitake mushroom, mushroom, matsutake mushroom, willow matsutake mushroom, of which shimeji mushroom or eryngii mushroom are especially preferred. Each of the above food materials can be used regardless of whether they are edible or inedible parts thereof.

When one or more edible plants classified as mushrooms as described above are included in the ingredient fraction A, the total content of the mushrooms may preferably be usually more than 50% by mass, especially more than 70% by mass, and even more than 90% by mass, especially substantially 100% by mass, of the total mass of the fraction A, in terms of wet mass basis. The upper limit is not especially restricted, but may be usually 100 mass % or lower of the total mass of the fraction A. When one or more edible plants classified as mushrooms as described above are included in the ingredient fraction B, the total content of the mushrooms may preferably be usually more than 50% by mass, especially more than 70% by mass, and even more than 90% by mass, especially substantially 100% by mass, of the total mass of the fraction B, in terms of wet mass basis The upper limit is not especially restricted, but may be usually 100 mass % or lower of the total mass of the fraction B. Each of the fraction A and the fraction B may preferably contain one or more same or different mushroom species in the above ratios, more preferably one or more same mushroom species in the above ratios.

Examples of edible plant species classified as fruits include, but are not limited to, akebi (five-leaf akebia), acerola, atemoya, avocado, apricot, strawberry, fig, iyokan, plum, unshiu mandarin, olive, orange, oyster, kabosu, quince, kiwifruit, kiwano, kumquat, guava, guzberry, gummi, grapefruit, coconut, star fruit, cherry, pomegranate, sanbokan, shequasar (Okinawa lime), watermelon, sudachi, plums, prunes, daidai, tangkor, tangzero, chalimoya, durian, hassak, passion fruit, banana, papaya, pitaya, hyuganut, loquat, grape, blueberry, buntan, white sapote, ponkan, makuwa, marmelo, mango, mangosteen, melon, peach, nectarine, mountain peach, yuzu, lychee, lime, raspberry, goldenberry, date (date palm fruit), longan, apple, and lemon. Each of the above food materials can be used regardless of whether they are edible or inedible parts thereof.

When one or more edible plants classified as fruits as described above are included in the ingredient fraction A, the total content of the fruits may preferably be usually more than 50% by mass, especially more than 70% by mass, and even more than 90% by mass, especially substantially 100% by mass, of the total mass of the fraction A, in terms of wet mass basis. The upper limit is not especially restricted, but may be usually 100 mass % or lower of the total mass of the fraction A. When one or more edible plants classified as fruits as described above are included in the ingredient fraction B, the total content of the fruits may preferably be usually more than 50% by mass, especially more than 70% by mass, and even more than 90% by mass, especially substantially 100% by mass, of the total mass of the fraction B, in terms of wet mass basis The upper limit is not especially restricted, but may be usually 100 mass % or lower of the total mass of the fraction B. Each of the fraction A and the fraction B may preferably contain one or more same or different fruit species in the above ratios, more preferably one or more same fruit species in the above ratios.

Edible plants to be contained in the fractions A and B according to the present invention may preferably include, but are not limited to, edible plants of the same classification (vegetables, cereals, mushrooms, fruits, potatoes, algae, nuts, pulse, etc.) from the perspective of suppressing off-flavor formation and highlighting the aromas and tastes unique to edible plants.

The term "wet mass basis ratio" (or simply referred to as "wet mass basis") herein refers to the content ratio of a component, etc., calculated with the wet mass containing water of the composition or fraction as the denominator and the content of the component as the numerator.

### *Seasoning and food additive, etc.:

The liquid seasoning of the present invention may contain any one or more seasonings, food additives, etc., or the contents of these seasonings may be limited as explained above. Examples of seasonings and food additives include: soy sauce, miso (Japanese fermented soybean paste), alcohols, sugars (e.g., glucose, sucrose, fructose, glucose-fructose liquid sugar, glucose-fructose liquid sugar, etc.), sugar alcohols (e.g., xylitol, erythritol, maltitol, etc.), artificial sweeteners (e.g., sucralose, aspartame, saccharin, acesulfame K, etc.), minerals (e.g., calcium, potassium, sodium, iron, zinc, magnesium, etc., and their salts), flavoring agents, pH adjusters (e.g., sodium hydroxide, potassium hydroxide, lactic acid, citric acid, tartaric acid, malic acid and acetic acid), cyclodextrins, antioxidants (e.g., vitamin E, vitamin C, tea extract, green coffee bean extract, chlorogenic acid, spice extract, caffeic acid, rosemary extract, vitamin C palmitate, rutin, quercetin, peach extract, sesame extract, etc.), emulsifiers (e.g., glycerin fatty acid esters, acetic acid monoglycerides, lactic acid monoglycerides, citric acid monoglycerides, diacetyl tartaric acid monoglycerides, succinic acid monoglycerides, polyglycerin fatty acid esters, polyglycerin condensed linosylate esters, chiraya extracts, soybean saponins, chia seed saponins, sucrose fatty acid esters, lecithin, etc.), colorants, thickening stabilizers, etc.

However, in view of the recent increase in nature consciousness, the liquid seasoning of the present invention may preferably be free of at least one type, preferably at least two types, most preferably all of the three types, of additives selected from the so-called emulsifiers, colorants, and thickening stabilizers (e.g., those listed in the "Table of food additive substance names for labeling" section of the "Pocket Book of Food Additives Labeling (2011 edition)" as "colorants," "thickening stabilizers," and "emulsifiers"). More specifically, the content of the food additives (e.g., those listed in the "Table of food additive substance names for labeling" section of the "Pocket Book of Food Additives Labeling (2011 edition)" for food additive use) in the liquid seasoning of the present invention may preferably be 1 mass % or lower, more preferably substantially zero, most preferably zero.

From the viewpoint of making it easier to perceive the sweetness of the food itself, it is desirable for the liquid seasoning of the present invention to contain less than 1% by mass of refined sugars (e.g., glucose, sucrose, fructose, glucose-fructose liquid sugar, fructose-glucose liquid sugar, etc.) other than those originating from the food ingredients, with respect to the total seasoning solution. In particular, it is particularly desirable that refined sugars other than those originating from the food ingredients are substantially not contained, or not contained at all, in the liquid seasoning.

### [Production method of the liquid seasoning containing edible plant ingredients]

The seasoning of the present invention can be produced according to the usual method for producing liquid seasonings, except that the ingredients in each fraction mentioned above should be contained in the final liquid seasoning to be within their respective ranges mentioned above. For example, the seasoning can be produced by agitating and mixing solid raw materials with liquid raw materials such as water and vinegar, then adding the remaining raw materials and dissolving the solid raw materials with stirring with a mixer, followed by heat sterilization, cooling, and packaging.

Specifically, the liquid seasoning of the present invention may preferably be produced according to a specific production method including at least steps (i) and (ii) below (hereinafter also referred to as "the production method of the present invention"):
(i) preparing a liquid mixture containing edible plant ingredients; and
(ii) heating the liquid mixture at a temperature of 80 °C or higher for 5 minutes or longer.

### *Step (i): preparation of liquid mixture:

This step (i) is to prepare a liquid mixture as a precursor to the liquid seasoning of the present invention. The liquid mixture can basically be prepared in accordance with the chemical makeups, physical properties, and other details of the liquid seasoning of the present invention as detailed above. However, some of these parameters may be changed by the heat treatment in subsequent step (ii). For example, the "(the hexanal content in the fraction A in terms of oil-and-fat mass basis)/(the hexanal content in the fraction B in terms of oil-and-fat mass basis) ratio" and the "(the DMDS content in the fraction A in terms of wet mass basis)/(the DMDS content in the fraction B in terms of wet mass basis) ratio" tend to be decreased by heating as will be explained later, while the "peak area ratio β/α" tends to be increased by heating as will be explained later. Therefore, it is preferable to adjust these values in consideration of the preferable range of the change rate and change difference of each parameter described below, either by adjusting these ratios appropriately in advance before heating, or by adjusting these ratios appropriately after heating, or by making appropriate adjustments both before and after heating.

The liquid mixture can be prepared by preparing the edible plant ingredients for the fraction A, the edible plant ingredients for the fraction B, and the media of each fraction separately, and mixing them together. Alternatively, the fraction A and/or the fraction B containing ingredients with desired sizes may be prepared by adjusting the size of one edible plant or a mixture of two or more edible plants that together form the ingredients of the fraction A and/or the fraction B by subjecting the edible plant(s) to processing such as cutting, crushing, squeezing, and heating, along with the medium of each fraction.

### *Step (ii): heating of liquid mixture

This step (ii) is to subject the liquid mixture prepared in step (i) above to heat treatment. The heating temperature (maximum temperature during heating) in the heat treatment is not restricted, but may preferably be usually 60°C or higher, especially 70°C or higher, and even 80°C or higher. If the heating temperature is lower than the lower limit mentioned above, the resulting quality may be insufficient due to lack of sterilization. In some embodiments, the lower limit of heating temperature may be set higher than the values mentioned above, i.e., such as 90°C or higher, or 100°C or higher, or 110°C or higher, or 120°C or higher. The upper limit of the heating temperature is also not restricted, but may preferably be usually 200 °C or lower, particularly 190 °C or lower, more particularly 180 °C or lower, more particularly 170 °C or lower, more particularly 160 °C or lower, more particularly 150 °C or lower. If the heating temperature is higher than the upper limit mentioned above, the composition may have a quality that imparts a heating odor. In some embodiments, the upper limit of the heating temperature may be lower than the values mentioned above, e.g., 140°C or lower, or 130°C or lower, or 125°C or lower.

The heating time (the time during which the heating temperature is maintained in the optimal range mentioned above) in the heat treatment is also not limited, but may preferably be usually be at least 1 minute, and among those, at least 3 minutes, and even more preferably at least 5 minutes, or 7 minutes, or 10 minutes or more. If the heating time is shorter than the lower limit mentioned above, the resulting quality may be insufficient due to lack of sterilization. In some embodiments, the lower limit of heating time may be longer than the values mentioned above, e.g., 15 minutes or more, or 20 minutes or more. The upper limit of heating time is also not limited, but may preferably be usually less than 10 hours, among which less than 5 hours, even less than 3 hours, or less than 1 hour is preferred. If the heating time is shorter than the aforementioned upper limit, the composition may have a quality that imparts a heating odor. In some embodiments, the upper limit of heating time may be shorter than the values mentioned above, e.g., less than 50 minutes, or less than 40 minutes, or less than 30 minutes.

It is preferred that in the heating treatment, the continuous time during which the temperature of the composition is maintained within the aforementioned preferable temperature range meets the aforementioned preferable time range. However, even if there is an intervening time during the heat treatment in which the temperature of the composition is lower than the aforementioned preferable temperature range, it is acceptable if there are intermittent time periods in which the temperature of the composition meets the aforementioned preferable temperature range and the total of such time periods meets the aforementioned preferable time range. In addition, even if the total time period during which the temperature of the composition meets the aforementioned suitable temperature range does not meet the aforementioned suitable time range, the same effect as meeting a suitable range of the aforementioned suitable time range may be obtained by holding the temperature for an extended period of time at a range close to the aforementioned suitable temperature range. Specifically, it is preferable to heat the aforementioned liquid mixture for at least 10 minutes, usually at 80°C or higher, especially at 90°C or higher, or even at 100°C or higher, or at 110°C or higher, especially at 120°C or higher.

The pressure during the heat treatment is not limited, but is usually at ambient pressure or under pressure. Other conditions for heat treatment are also not limited and may be selected as appropriate. Examples of sterilization methods include the use of heat exchangers such as jacketed tanks, snake tanks, and plate heaters, mixing with steam, and retort sterilization under high temperature and high pressure conditions.

The aforementioned ratio of (the hexanal content in the fraction A in terms of oil-and-fat mass basis)/(the hexanal content in the fraction B in terms of oil-and-fat mass basis) tends to be decreased by heat treatment. Accordingly, it is preferable to carry out heat treatment of the liquid mixture such that the aforementioned ratio decreases by a certain percentage or more before and after heating (i.e., such that the decrease ratio defined as "{ (the ratio before heating)-(the ratio after heating)}/(the ratio before heating)" equals to or higher than a predetermined limit). Specifically, the heat treatment may preferably be carried out such that the decrease ratio is usually 10% or higher, particularly 20% or higher, more particularly 30% or higher, still particularly 40% or higher, or 50% or higher, or 60% or higher, or 70% or higher, or 80% or higher, especially 90% or higher. On the other hand, the upper limit for the decrease ratio is not restricted, but may preferably be usually less than 100%, or less than 97%.

In addition, it is preferable to carry out heat treatment of the liquid mixture such that the decremental difference in the ratio of (the hexanal content in the fraction A in terms of oil-and-fat mass basis)/(the hexanal content in the fraction B in terms of oil-and-fat mass basis) before and after heat treatment (i.e., the decremental difference defined as "(the ratio before the heating treatment) - (the ratio after the heating treatment)") equals to or higher than a predetermined limit. Specifically, the heat treatment may preferably be carried out such that the decremental difference is usually 0.1 or higher, particularly 0.3 or higher, more particularly 0.5 or higher, still particularly 0.7 or higher, or 1.0 or higher, or 2.0 or higher, or 3.0 or higher, or 4.0 or higher, or 5.0 or higher, or 6.0 or higher, especially 7.0 or higher. On the other hand, the upper limit for the decremental difference is not restricted, but may preferably be usually lower than 100, particularly lower than 70, still particularly lower than 60, more particularly lower than 50, or lower than 40, or lower than 30, or lower than 20.

Likewise, the aforementioned ratio of (the DMDS content in the fraction A in terms of oil-and-fat mass basis)/(the DMDS content in the fraction B in terms of oil-and-fat mass basis) tends to be decreased by heat treatment. Accordingly, it is preferable to carry out heat treatment of the liquid mixture such that the aforementioned ratio decreases by a certain percentage or more before and after heating (i.e., such that the decrease ratio defined as "{(the ratio before the heating treatment)-(the ratio after the heating treatment)}/(the ratio before the heating treatment)" equals to or higher than a predetermined limit). Specifically, the heat treatment may preferably be carried out such that the decrease ratio is usually 10% or higher, particularly 20% or higher, more particularly 30% or higher, still particularly 40% or higher, or 50% or higher, or 60% or higher, or 70% or higher, or 80% or higher, especially 90% or higher. On the other hand, the upper limit for the decrease ratio is not restricted, but may preferably be usually less than 100%, or less than 97%.

In addition, it is preferable to carry out heat treatment of the liquid mixture such that the decremental difference in the ratio of (the DMDS content in the fraction A in terms of oil-and-fat mass basis)/(the DMDS content in the fraction B in terms of oil-and-fat mass basis) before and after heat treatment (i.e., the decremental difference defined as "(the ratio before the heating treatment) - (the ratio after the heating treatment)") equals to or higher than a predetermined limit. Specifically, the heat treatment may preferably be carried out such that the decremental difference is usually 0.1 or higher, particularly 0.3 or higher, more particularly 0.5 or higher, still particularly 0.7 or higher, or 1.0 or higher, or 2.0 or higher, or 3.0 or higher, or 4.0 or higher, or 5.0 or higher, or 6.0 or higher, especially 7.0 or higher. On the other hand, the upper limit for the decremental difference is not restricted, but may preferably be usually lower than 100, particularly lower than 70, still particularly lower than 60, more particularly lower than 50, or lower than 40, or lower than 30, or lower than 20.

On the other hand, the aforementioned peak area ratio β/α tends to be increased by heat treatment. Accordingly, it is preferable to carry out heat treatment of the liquid mixture such that the aforementioned ratio increases by a certain percentage or more before and after heating (i.e., such that the increase ratio defined as "{(the ratio after the heating treatment)-(the ratio before the heating treatment)}/(the ratio before the heating treatment)" equals to or higher than a predetermined limit). Specifically, the heat treatment may preferably be carried out such that the increase ratio is usually 1.0 or higher, particularly 2.0 or higher, more particularly 3.0 or higher, still particularly 4.0 or higher, or 5.0 or higher, or 6.0 or higher, or 7.0 or higher, or 9.0 or higher, or 11.0 or higher, or 13.0 or higher, or 15.0 or higher, especially 18.0 or higher. On the other hand, the upper limit for the increase ratio is not restricted, but may preferably be usually lower than 100, particularly lower than 90, still particularly lower than 80, more particularly lower than 70, or lower than 60, or lower than 50, or lower than 40.

In addition, it is preferable to carry out heat treatment of the liquid mixture such that the incremental difference in the peak area ratio β/α before and after heat treatment (i.e., the incremental difference defined as "(the ratio after the heating treatment) - (the ratio before the heating treatment)") equals to or higher than a predetermined limit. Specifically, the heat treatment may preferably be carried out such that the incremental difference is usually 0.1 or higher, particularly 0.3 or higher, more particularly 0.5 or higher, still particularly 0.7 or higher, or 1.0 or higher, or 2.0 or higher, or 3.0 or higher, or 4.0 or higher, or 5.0 or higher, or 6.0 or higher, especially 7.0 or higher. On the other hand, the upper limit for the incremental difference is not restricted, but may preferably be usually lower than 100, particularly lower than 70, still particularly lower than 60, more particularly lower than 50, or lower than 40, or lower than 30, or lower than 20.

### *Other treatment:

In addition to the above treatments, optional treatments may be added during the production of the seasoning. Such optional treatments include container filling treatment, sterilization treatment, stirring treatment, emulsification treatment, kneading treatment, strainer treatment, filtration treatment, fermentation treatment, steam treatment, activated carbon treatment, etc.

When filling containers with the seasoning of the present invention, the details of the treatment are arbitrary. However, for example, when the seasoning is made into the form of a dry grocery product, the following filling methods are used to prevent microbial contamination of the container: aseptic filling, in which the container is made aseptic and then filled with the aseptic filling liquid; hot-pack filling, in which the container is filled with the liquid content after heat sterilization at a high temperature and the heat from the liquid content is used to control microorganisms in the container: and post-filling sterilization, in which the containers are heated in a pastry riser or retort kettle after filling with the liquid contents to control microorganisms in the containers, etc. The seasoning of the present invention is particularly desirable because it is less likely to produce a deteriorating odor even when the liquid inside the container is sterilized at high temperatures, as in the case of retort sterilization.

Any container can be used as a container for filling the seasoning of the present invention. Examples include: long-life room temperature (20°C in this invention) storage containers with a shelf life of longer than 4 months from manufacture; containers partially or wholly made of resin; non-usable containers that can be used multiple times by sealing the container opening after opening; re-sealable containers with a re-sealable cap or stopper or other mechanism that prevents leakage of the liquid contents, etc. Such containers can be used even if the liquid seasoning inside is susceptible to deterioration.

The method for storing the seasoning of the present invention is also not limited. The seasoning of the present invention may be stored at room temperature or refrigerated. It is particularly desirable to provide the product as a dry grocery product that can be distributed at room temperature and stored for a long period of time (in the present invention, more than 4 months more preferably more than 6 months), since the liquid content is less likely to deteriorate. It is particularly desirable to provide long-life room temperature-storable liquid seasonings with a shelf life longer than four months at room temperature.

### [Others]

The methods of using and eating the liquid seasoning of the present invention described above are not restricted. As an example, the liquid seasoning of the present invention can be used as a seasoning and consumed with other foods. Foods to be consumed in combination with the liquid seasoning of the present invention include, but are not limited to, various food materials such as uncooked or cooked meat, seafood, edible plants (e.g., vegetables, cereals, fruits), or various processed foods using one or more of these materials. Examples of processed foods to be consumed in combination with the liquid seasoning include noodles (e.g., pasta, ramen, udon, somen/hiyamugi (Japanese wheat noodles), soba (Japanese buckwheat noodles), etc.) made from various edible plants (e.g., beans). In this case, the liquid seasoning of the present invention can be used as soup or sauce and combined with noodles. The combination is not limited, and the noodles may be eaten dipped in the liquid seasoning of the present invention, or the liquid seasoning of the present invention may be poured over the noodles and consumed. Needless to say, it may also be eaten after heat treatment or other cooking as appropriate. Alternatively, the liquid seasoning of the present invention may be consumed alone (as is or diluted with a medium such as water) as soup, for example, without being combined with other foods.

### EXAMPLES

The present invention will be described in more detail with reference to the following examples. However, these examples are only shown for convenience of explanation, and the invention is not limited to these examples in any sense.

### [Preparation of liquid seasoning samples]

The liquid seasoning samples of Test Examples and Comparative Examples were prepared in accordance with the following procedure. Tomatoes ("Angelle" mini-tomatoes, a variation of tomatoes), eggplants, and small onions were used as vegetables, corn (young corn, a variation of corn) was used as a cereal, and shimeji mushrooms were used as mushrooms. Tomatoes (mini-tomatoes), small onions, and corn (young corn) that did not pass through a sieve with a 10 cm aperture were cut to a size that would pass through a sieve with a 10 cm aperture and used as ingredients in fraction A. Eggplants and shimeji mushrooms were cut to a size that would not pass through a sieve with an opening of 2.50 centimeters and used as ingredients for fraction A (the size was adjusted to pass through a sieve with a 10 cm aperture as the upper limit). Tomatoes ("Angelle" mini-tomatoes, a variation of tomatoes, and "Momotaro" tomatoes were used), eggplants, and small onions were used as vegetables, corn was used as a cereal, and shimeji mushrooms were used as mushrooms, and all of these ingredients were crushed to 1-mesh-pass, 200-mesh-on sizes, and used as ingredients in fraction B. The insoluble dietary fiber localized parts (skin or seeds) of tomatoes and mini-tomatoes were crushed using a pin mill until the modal diameter was adjusted to 200 µm and used as a micronized treated product of insoluble dietary fiber localized part. The insoluble dietary fiber localized parts (okara, the leftover of juice) of soybeans were crushed using a hammer mill until the modal diameter was adjusted to 10 µm and used as a micronized treated product of insoluble dietary fiber localized part (the percentages in the table are indicated in terms of wet mass basis).

Next, the liquid mixtures of the Test Examples and the Comparative Examples were heat-sterilized at 120°C for 10 minutes. For the Examples in the tables below where the processing conditions are described as "concentration adjusted," the concentration of each component in the fractions A and B was measured, and then adjusted such that the final percentage of each component in the fractions A and B would be the values described in the tables. The concentration of each component was adjusted by using reagents hexanal (CAS No. 66-25-1, manufactured by Tokyo Kasei Kogyo, product code: H0133), DMDS (CAS No. 624-92-0, manufactured by Tokyo Kasei Kogyo, product code: D0714), and/or DMTS (CAS No. 3658-80-8, manufactured by FUJIFILM Wako Pure Chemical Industry Co. Product code: D0714), and/or DMTS (CAS No. 3658-80-8, FUJIFILM Wako Pure Chemical Industries, product code: 327-41221) diluted in water to an appropriate concentration, and immersing the fraction A and/or the fraction B in the diluted solutions of the reagents, or by diluting the Fraction A and/or Fraction B with water. Thus, the liquid seasonings of the Test Examples and the Comparative Examples were obtained.

### [Separation and collection of each fraction]

100 g sample of each of the Test Examples and Comparative Examples (20°C) was spread thinly and evenly on a sieve with an opening of 2.50 centimeters and a sieve with an opening of 75 micrometers stacked in this order from the top to the bottom and left to stand for 10 minutes, and the masses remaining on these sieves were collected as the fraction A (1-mesh-on) and the fraction B (1-mesh-pass, 200-mesh-on), and their wet masses were measured.

### Measurement of the concentration of each component]

### *DHS-GC/MS analysis:

A small amount (1 g) of each of the fractions A and B of the liquid seasoning of each of the Test Examples and Comparative Examples was measured out in a 10-mL flat-bottomed vial, sealed, and subjected to analysis by the DHS-GC/MS method. The retention times of each component were checked with the relevant ions of each component (DMDS: m/z = 45, 79, 94; hexanal: m/z = 56, 57, 72; DMTS: m/z = 79, 111, 126), and the quantities of the confirmation ions ((DMDS: m/z = 94, hexanal: m/z = 72, DMTS: m/z = 126) of these diluted samples and the measurement samples were compared. The specific conditions for DHS-GC/MS analysis were as follows.

### [GC/MS conditions]

(Dynamic head space (dynamic headspace: DHS) injection method)
*Instrument: Agilent 7890B (GC), 5977B (MS)
   Gester MultiPurpose Sampler (auto-sampler)
*Absorption resin: TENAX
*Incubation temperature: 80 °C
*Nitrogen gas purge amount: 60mL
*Nitrogen gas purge flow rate: 10mL/minute
*TDU: [30 °C] - [210 °C/minute] - [240 °C (3 minutes)]
*CIS: [10 °C] - [12 °C /second] - [240 °C]

### (Liner filler: TENAX)

*Column: Gester DB-WAX (length: 30m x caliber: 250µm x membrane thickness: 0.25µm)
*Column temperature: [40 °C (3 minutes)]-[5 °C/minute]-[240 °C (7 minutes)]
*carrier gas: He
*transfer line: 250 °C
*Ion source temperature: 230 °C
*Scan parameter: m/z = 28.7 to 300
*Split: none

### *PFPD analysis:

A portion of each sample of the fractions A and B of the liquid seasoning of each of the Test Examples and Comparative Examples was subjected to a pulse-type flame photometric detector to analyze the sulfur compounds in the sample to detect sulfur-containing compounds (e.g., DMDS) in the sample. The OI Analytical 5380 Pulsed Flame Photometric Detector (OI Analytical) was used as the pulsed flame photometric detector. The samples were analyzed in S-mode (conditions optimized for sulfur). Under the above conditions, the components separated by one-dimensional GC/MS analysis in the fraction A were measured using a pulsed flame photometric detector. The ratio (PFPD peak area ratio β/α) of the PFPD peak area β, where m/z = 61 and 90 were detected together at retention times of 13 to 18 minutes (which corresponds to the PFPD peak at the DMDS retention times), to the PFPD peak area α, where m/z = 45, 79, and 94 were both detected at retention times of 8 to 11 minutes (which is deemed to correspond to the peak of the ingredients originating from the edible plant in the fraction A, although the details are unknown), was determined.

### *Measurement of Bostwick viscosity:

The Bostwick viscosity of each sample of the fractions A and B of the liquid seasoning of each of the Test Examples and Comparative Examples was measured using a KO-type Bostwick viscometer (manufactured by Fukaya Tekkosho, trough length 28.0 cm). Specifically, the sample was placed horizontally using the level of the device, and after closing the gate, the reservoir was filled to full capacity with the sample temperature adjusted to 20°C. The time was measured as the trigger was pressed down to open the gate, and the distance of material flow in the trough was measured at 30 seconds elapsed.

### [Sensory evaluation of the liquid seasoning sample]

Each sample of the Test Examples and Comparative Examples was subjected to sensory evaluation according to the following procedures.

### *Evaluation procedures for "deterioration odor of fraction A," "deterioration odor of fraction B," and "overall evaluation":

Sensory tests to evaluate the quality of each liquid seasoning sample of the Test Examples and Comparative Examples were conducted by a total of 10 trained sensory inspectors. Test samples were prepared by referring to a previous report (Industry Trends: Concept of "Shelf Life Extension" Technology, JAS Information, 503, 2-5 (2011)), by storing the sample at 40°C for 30 days to reproduce the degree of deterioration equivalent to storage at 20°C for 120 days. The odors of the fractions A and B in the sample stored at 40°C for 30 days were compared with those of the sample stored at 4°C to conduct sensory evaluation of "deterioration odor of fraction A" and "deterioration odor of fraction B." In addition, the sample stored at 40°C for 30 days was eaten as it is for "overall evaluation."

### *Evaluation criteria for "deterioration odor of fraction A":

The deterioration odor in the fraction A of the sample stored at 40°C for 30 days was compared to fraction A of the sample stored at 4°C, and evaluated on the following one-to-five scale.
5: Very favorable, with no deterioration odor felt.
4: Favorable, with little deterioration odor felt.
3: Acceptable, with moderate deterioration odor felt.
2: Unfavorable, with some deterioration odor felt.
1: Very unfavorable, with strong deterioration odor felt.

### *Evaluation criteria for "deterioration odor of fraction B":

The deterioration odor in the fraction B of the sample stored at 40°C for 30 days was compared to fraction A of the sample stored at 4°C, and evaluated on the following one-to-five scale.
5: Very favorable, with no deterioration odor felt.
4: Favorable, with little deterioration odor felt.
3: Acceptable, with moderate deterioration odor felt.
2: Unfavorable, with some deterioration odor felt.
1: Very unfavorable, with strong deterioration odor felt.

### *Evaluation criteria for "overall evaluation":

The flavor of the sample stored at 40°C for 30 days was evaluated on the following one-to-five scale.
5: Very favorable, with very good aroma balance between the fractions A and B.
4: Favorable, with good aroma balance between the fractions A and B.
3: Acceptable, with moderate aroma balance between the fractions A and B.
2: Unfavorable, with bad aroma balance between the fractions A and B.
1: Very unfavorable, with very bad aroma balance between the fractions A and B.

### *Procedures for conducting sensory evaluation:

For each of the aforementioned sensory test evaluation items, "deterioration odor of fraction A," "deterioration odor of fraction B," and "overall evaluation," the following test A) through C) were conducted for the sensory inspectors, and the inspectors who had particularly excellent performance, had experience in product development, had extensive knowledge of food quality such as taste and texture, and could make absolute evaluation on each sensory test item were selected.

A) Taste discrimination test: a total of seven samples were prepared, including five aqueous solutions prepared for five tastes (sweetness: taste of sugar; sourness: taste of tartaric acid; umami: taste of monosodium glutamate; saltiness; taste of sodium chloride; and bitterness: taste of caffeine), each with a concentration close to the threshold value of each component, and two sample solutions with distilled water, and the trainees were instructed to accurately identify the sample of each taste.
B) Concentration difference discrimination test: a series of five solutions with slightly different concentrations was prepared for each of salt and acetic acid, and the trainees were instructed to accurately distinguish the solutions of different concentrations for each component.
C) Three-point identification test to accurately identify from three soy sauce samples, two from Manufacturer A and one from Manufacturer B, the soy sauce sample from Manufacturer B.

For each of the aforementioned evaluation items, standard samples were evaluated in advance by all inspectors to standardize the scores for each of the evaluation criteria to conduct objective sensory evaluation by a total of 10 inspectors. Each evaluation item was evaluated by each inspector by selecting the number closest to his or her own evaluation from a five-point scale for each item. The total of the evaluation results was calculated from the arithmetic mean of the scores of the 10 inspectors, rounded off to one decimal place to determine the final score.

### [Analysis and evaluation results of the composition samples]

The chemical makeup, manufacturing conditions, physical properties, and evaluation results of each liquid seasoning sample of the Test Examples and Comparative Examples are summarized in Tables 2 through 4 below.

**[Table 2-1]**

| Table 2 | | Ingredients | | | | Processing conditions |
|---|---|---|---|---|---|---|
| | | Fraction | | Fraction B | | |
| | | Edible plant | Content | Edible plant | Content | |
| | | | mass % | | mass % | |
| Test Example | 1 | Mini-tomato | 60% | Tomato + Tomato peel and seed crushed paste (1 mass % of Fraction B) | 35% | Concentration adjusted |
| Test Example | 2 | Mini-tomato | 60% | Tomato + Tomato peel and seed crushed paste (1 mass % of Fraction B) | 35% | Test Example1 heated at 80°C for 10 min |
| Test Example | 3 | Mini-tomato | 50% | Tomato + Tomato peel and seed crushed paste ( 1 mass % of Fraction B) | 35% | Test Example1 heated at 100°C for 10 min |
| Test Example | 4 | Mini-tomato | 60% | Tomato + Tomato peel and seed crushed paste (1 mass % of Fraction B) | 35% | Test Example1 heated at 12C°C for 20 min |
| Comparative Example | 5 | Mini-tomato | 60% | Tomato + Tomato peel and seed crushed paste (1 mass % of Fraction B) | 35% | Test Example1 heated at 125°C for 30 min |
| Comparative Example | 6 | Mini-tomato | 12t%. | Tomato | 78% | Concentration adjusted |
| Test Example | 7 | Mini-tomato | 12% | Tomato | 78% | Concentration adjusted |
| Test Example | 8 | Mini-tomato | 12% | Tomato | 78% | Concentration adjusted |
| Test Example | 9 | Mini-tomato | 12% | Tomato | 78% | Concentration adjusted |
| Test Example | 10 | Mini-tomato | 12% | Tomato | 78% | Concentration adjusted |
| Test Example | 11 | Mini-tomato | 12% | Tomato | 78% | Concentration adjusted |
| Test Example | 12 | Mini-tomato | 12% | Tomato | 78% | Concentration adjusted |
| Test Example | 13 | Mini-tomato | 12% | Tomato | 78% | Concentration adjusted |
| Test Example | 14 | Mini-tomato | 12% | Tomato | 78% | Concentration adjusted |
| Comparative Example | 15 | Mini-tomato | 30% | Tomato + Tomato peel and seed crushed paste (0.7 mass % of Fraction B) | 70% | Concentration adjusted |
| Test Example | 16 | Mini-tomato | 30% | Tomato + Tomato peel and seed crushed paste (0.7 mass % of Fraction B) | 70% | Concentration adjusted |
| Test Example | 17 | Mini-tomato | 30% | Tomato + Tomato peel and seed crushed paste (0.7 mass % of Fraction B) | 70% | Concentration adjusted |
| Test Example | 18 | Mini-tomato | 30% | Tomato + Tomato peel and seed crushed paste (0.7 mass % of Fraction B) | 70% | Concentration adjusted |
| Test Example | 19 | Mini-tomato | 30% | Tomato + Tomato peel and seed crushed paste (0.7 mass % of Fraction B) | 70% | Concentration adjusted |

**[Table 2-2]**

| Table 2 | | Ingredients | | | | Processing conditions |
|---|---|---|---|---|---|---|
| | | Fraction A | | Fraction B | | |
| | | Edible plant | Content | Edible plant | Content | |
| | | | mass % | | mass % | |
| Test Example | 20 | Mini-tomato | 30% | Tomato + Tomato peel and seed crushed paste (0.7 mass % of Fraction B) | 70% | Concentration adjusted |
| Test Example | 2 1 | Mini-tomato | 30% | Tomato + Tomato peel and seed crushed paste (0.7 mass % of Fraction B) | 70% | Concentration adjusted |
| Test Example | 22 | Mini-tomato | 30% | Tomato + Tomato peel and seed crushed paste (0.7 mass % of Fraction B) | 70% | Concentration adjusted |
| Test Example | 23 | Mini-tomato | 30% | Tomato + Tomato peel and seed crushed paste (0.7 mass % of Fraction B) | 70% | Concentration adjusted |
| Test Example | 24 | Mini-tomato | 30% | Tomato + Tomato peel and seed crushed paste (0.7 mass % of Fraction B) | 70% | Concentration adjusted |
| Comparative Example | 25 | Mini-tomato | 30% | Tomato + Tomato peel and seed crushed paste (0.7 mass % of Fraction B) | 70% | Concentration adjusted |
| Test Example | 26 | Mini-tomato | 54% | Mini-tomato + Tomato peel and seed crushed paste (0.3 mass % of Fraction B) | 45% | Concentration adjusted |
| Test Example | 27 | Mini-tomato | 70% | Mini-tomato + Tomato peel and seed crushed paste (0.1 mass % of Fraction B) | 30% | Concentration adjusted |
| Comparative Example | 28 | Mini-tomato | 70% | Tomato + Tomato peel and seed crushed paste (0.5 mass % of Fraction B) | 30% | Concentration adjusted |
| Test Example | 29 | Mini-tomato | 70% | Tomato + Tomato peel and seed crushed paste (0.5 mass % of Fraction B) | 30% | Concentration adjusted |
| Test Example | 30 | Mini-tomato | 70% | Tomato + Tomato peel and seed crushed paste (0.5 mass % of Fraction B) | 30% | Concentration adjusted |
| Test Example | 31 | Mini-tomato | 70% | Tomato + Tomato peel and seed crushed paste (0.5 mass % of Fraction B) | 30% | Concentration adjusted |
| Test Example | 32 | Mini-tomato | 70% | Tomato + Tomato peel and seed crushed paste (0.5 mass % of Fraction B) | 30% | Concentration adjusted |
| Test Example | 33 | Mini-tomato | 70% | Tomato + Tomato peel and seed crushed paste (0.5 mass % of Fraction B) | 30% | Concentration adjusted |
| Test Example | 34 | Mini-tomato | 70% | Tomato + Tomato peel and seed crushed paste (0.5 mass % of Fraction B) | 30% | Concentration adjusted |
| Test Example | 35 | Mini-tomato | 70% | Tomato + Tomato peel and seed crushed paste (0.5 mass % of Fraction B) | 30% | Concentration adjusted |

**[Table 2-3]**

| Table 2 | | Ingredients | | | | Processing conditions |
|---|---|---|---|---|---|---|
| | | Fraction A | | Fraction B | | |
| | | Edible plant | Content | Edible plant | Content | |
| | | | mass % | | mass % | |
| Test Example | 36 | Mini-tomato | 70% | Tomato + Tomato peel and seed crushed paste (0.5 mass % of Fraction B) | 30% | Concentration adjusted |
| Test Example | 37 | Mini-tomato | 70% | Tomato + Tomato peel and seed crushed paste (0.5 mass % of Fraction B) | 30% | Concentration adjusted |
| Test Example | 38 | Mini-tomato | 70% | Tomato + Tomato peel and seed crushed paste (0.5 mass % of Fraction B) | 30% | Concentration adjusted |
| Test Example | 39 | Mini-tomato | 70% | Tomato + Tomato peel and seed crushed paste (0.5 mass % of Fraction B) | 30% | Concentration adjusted |
| Test Example | 40 | Mini-tomato | 70% | Tomato + Tomato peel and seed crushed paste (0.5 mass % of Fraction B) | 30% | Concentration adjusted |
| Test Example | 41 | Mini-tomato | 70% | Tomato + Tomato peel and seed crushed paste (0.3 mass % of Fraction B) | 30% | Concentration adjusted |
| Test Example | 42 | Mini-tomato | 70% | Tomato + Tomato peel and seed crushed paste (0.3 mass % of Fraction B) | 30% | Concentration adjusted |
| Test Example | 43 | Mini-tomato | 70% | Tomato + Tomato peel and seed crushed paste (0.3 mass % of Fraction B) | 30% | Concentration adjusted |
| Test Example | 44 | Mini-tomato | 70% | Tomato + Tomato peel and seed crushed paste (0.3 mass % of Fraction B) | 30% | Concentration adjusted |
| Test Example | 45 | Mini-tomato | 70% | Tomato + Tomato peel and seed crushed paste (0.3 mass % of Fraction B) | 30% | Concentration adjusted |
| Test Example | 46 | Mini-tomato | 70% | Tomato + Tomato peel and seed crushed paste (0.3 mass % of Fraction B) | 30% | Concentration adjusted |
| Test Example | 47 | Mini-tomato | 70% | Tomato + Tomato peel and seed crushed paste (0.3 mass % of Fraction B) | 30% | Concentration adjusted |
| Test Example | 48 | Mini-tomato | 70% | Tomato + Tomato peel and seed crushed paste (0.3 mass % of Fraction B) | 30% | Concentration adjusted |
| Test Example | 49 | Mini-tomato | 70% | Tomato + Tomato peel and seed crushed paste (0.3 mass % of Fraction B) | 30% | Concentration adjusted |
| Comparative Example | 50 | Mini-tomato | 70% | Tomato + Tomato peel and seed crushed paste (0.3 mass % of Fraction B) | 30% | Concentration adjusted |
| Comparative Example | 51 | Mini-tomato | 70% | Tomato + Tomato peel and seed crushed paste (0.3 mass % of Fraction B) | 30% | Concentration adjusted |
| Test Example | 52 | Eggplant | 60% | Tomato + Okara crushed paste (0.1 mass % of Fraction B) | 35% | Concentration adjusted |

**[Table 2-4]**

| Table 2 | | Ingredients | | | | Processing conditions |
|---|---|---|---|---|---|---|
| | | Fraction A | | Fraction B | | |
| | | Edible plant | Content | Edible plant | Content | |
| | | | mass % | | mass % | |
| Test Example | 53 | Eggplant | 60% | Eggplant + Okara crushed paste (0.1 mass % of Fraction B) | 30% | Concentration adjusted |
| Test Example | 54 | Small onion | 30% | Tomato + Tomato peel crushed paste (2 mass % of Fraction B) | 60% | Concentration adjusted |
| Test Example | 55 | Small onion | 30% | Small onion + Tomato peel crushed paste (2 mass % of Fraction B) | 50% | Concentration adjusted |
| Test Example | 50 | Shimeji mushroom | 40% | Tomato + Tomato seed crushed paste (0.9 mass % of Fraction B) | 55% | Concentration adjusted |
| Test Example | 57 | Shimeji mushroom | 40% | Shimeji mushroom + Tomato seed crushed paste (0.9 mass % of Fraction B) | 50% | Concentration adjusted |
| Test Example | 58 | Young corn | 20% | Tomato + Tomato peel and seed crushed paste (0.9 mass % of Fraction B) | 70% | Concentration adjusted |
| Test Example | 59 | Young corn | 20% | Corn + Tomato peel and seed crushed paste (0.9 mass % of Fraction B) | 55% | Concentration adjusted |
| Test Example | 50 | Mini-tomato | 70% | Tomato + Tomato peel and seed crushed paste (0.3 mass % of Fraction B) | 30% | Concentration adjusted |
| Test Example | 61 | Mini-tomato | 70% | Tomato + Tomato peel and seed crushed paste (0.3 mass % of Fraction B) | 30% | Concentration adjusted |
| Test Example | 62 | Mini-tomato | 70% | Tomato + Tomato peel and seed crushed paste (0.3 mass % of Fraction B) | 30% | Concentration adjusted |
| Test Example | 63 | Mini-tomato | 70% | Tomato + Tomato peel and seed crushed paste (0.3 mass % of Fraction B) | 30% | Concentration adjusted |
| Test Example | 64 | Mini-tomato | 70% | Tomato + Tomato peel and seed crushed paste (0.3 mass % of Fraction B) | 30% | Concentration adjusted |
| Test Example | 65 | Mini-tomato | 70% | Tomato + Tomato peel and seed crushed paste (0.3 mass % of Fraction B) | 30% | Concentration adjusted |
| Test Example | 66 | Mini-tomato | 70% | Tomato + Tomato peel and seed crushed paste (0.3 mass % of Fraction B) | 30% | Concentration adjusted |
| Test Example | 67 | Mini-tomato | 70% | Tomato + Tomato peel and seed crushed paste (0.3 mass % of Fraction B) | 30% | Concentration adjusted |
| Test Example | 68 | Mini-tomato | 70% | Tomato + Tomato peel and seed crushed paste (0.3 mass % of Fraction B) | 30% | Concentration adjusted |
| Test Example | 69 | Mini-tomato | 70% | Tomato + Tomato peel and seed crushed paste (0.3 mass % of Fraction B) | 30% | Concentration adjusted |

**[Table 2-5]**

| Table 2 | | Ingredients | | | | Processing conditions |
|---|---|---|---|---|---|---|
| | | Fraction A | | Fraction B | | |
| | | Edible plant | Content | Edible plant | Content | |
| | | | mass % | | mass % | |
| Test Example | 70 | Mini-tomato | 45% | Tomato + Tomato peel and seed crushed paste (0.3 mass % of Fraction B) | 55% | Concentration adjusted |
| Test Example | 71 | Mini-tomato | 40% | Tomato + Tomato peel and seed crushed paste (0.3 mass % of Fraction B) | 60% | Concentration adjusted |
| Test Example | 72 | Mini-tomato | 34% | Tomato + Tomato peel and seed crushed paste (0.3 mass % of Fraction B) | 65% | Concentration adjusted |
| Test Example | 73 | Mini-tomato | 25% | Tomato + Tomato peel and seed crushed paste (0.3 mass % of Fraction B) | 70% | Concentration adjusted |
| Test Example | 74 | Mini-tomato | 18% | Tomato + Tomato peel and seed crushed paste (0.3 mass % of Fraction B) | 72% | Concentration adjusted |
| Test Example | 75 | Mini-tomato | 10% | Tomato + Tomato peel and seed crushed paste (0.3 mass % of Fraction B) | 73% | Concentration adjusted |
| Test Example | 76 | Mini-tomato | 40% | Tomato + Tomato peel and seed crushed paste (0.3 mass % of Fraction B) | 58%. | Concentration adjusted |
| Test Example | 77 | Mini-tomato | 40% | Tomato + Tomato peel and seed crushed paste (0.3 mass % of Fraction B) | 58% | Concentration adjusted |
| Test Example | 78 | Mini-tomato | 40% | Tomato + Tomato peel and seed crushed paste (0.3 mass % of Fraction B) | 58% | Concentration adjusted |
| Test Example | 73 | Mini-tomato | 40% | Tomato + Tomato peel and seed crushed paste (0.3 mass % of Fraction B) | 58% | Concentration adjusted |
| Test Example | 80 | Mini-tomato | 40% | Tomato + Tomato peel and seed crushed paste (0.3 mass % of Fraction B) | 58% | Concentration adjusted |
| Test Example | 81 | Mini-tomato | 40% | Tomato + Tomato peel and seed crushed paste (0.3 mass % of Fraction B) | 58% | Concentration adjusted |
| Test Example | 82 | Mini-tomato | 40% | Tomato + Tomato peel and seed crushed paste (0.3 mass % of Fraction B) | 58% | Concentration adjusted |
| Test Example | 83 | Mini-tomato | 40% | Tomato + Tomato peel and seed crushed paste (0.3 mass % of Fraction B) | 58% | Concentration adjusted |
| Test Example | 84 | Mini-tomato | 40% | Tomato + Tomato peel and seed crushed paste (0.3 mass % of Fraction B) | 58% | Concentration adjusted |

**[Table 3-1]**

| Table 3 | | Hexanal | | | PFPD | | DMDS | | | Oil and Fat | DMTS | Bostwick viscosity |
|---|---|---|---|---|---|---|---|---|---|---|---|---|
| | | Concentration in Fraction A (oil-and-fat mass basis) | Concentration (A)/ Concentration (B) | | Peak area ratio β/α | | Concentration in Fraction B (wet mass basis) | Concentration (A)/ Concentration (8) | | Content in Fraction B | Concentration in Fraction B (wet mass basis) | |
| | | | Concentration ratio (oil-and-fat mass basis) | Decrease ratio before and after heating | Peak area ratio | increase ratio before and after heating | | Concentration ratio (wet mass basis) | Decrease ratio before and after heating | | | |
| | | ppb | | % | | % | ppb | | % | mass % | ppb | cm |
| Test Example | 1 | 3000 | 26.1 | - | 0.9 | - | 1.1 | 1.5 | - | 15% | 6 | 3 |
| Test Example^{.} | 2 | 2600 | 16.3 | 38% | 2.6 | 19 | 1.6 | 0.9 | 39% | 15% | 10 | 3 |
| Test Example | 3 | 1200 | 80 | 69% | 175 | 18.8 | 0.9 | 0.8 | 50% | 15% | 13 | 3 |
| Test Example | 4 | 289 | 1.9 | 93% | 33.3 | 36.5 | 0.9 | 0.7 | 57% | 15% | 13 | 3 |
| Comparative Example | 5 | 277 | 08 | 97% | 58.7 | 65.1 | 6.2 | 0.2 | 90% | 15% | 20 | 3 |
| Comparative Example | 6 | 20 | 0.7 | - | 25.0 | - | 45 | 0.7 | - | 15% | 5 | 20 |
| Test Example | 7 | 1 | 1.1 | - | 25 0 | - | 4.5 | 0.7 | - | 15% | 5 | 20 |
| Test Example | 8 | 11 | 1.1 | - | 25.0 | - | 4.5 | 0.7 | - | 15% | 5 | 20 |
| Test Example | 9 | 22 | 1.1 | - | 25.0 | - | 4.5 | 0.7 | - | 15% | 5 | 20 |
| Test Example | 10 | 15 | 1.5 | - | 25.0 | - | 4.5 | 0.7 | - | 15% | 15 | 20 |
| Test Example | 11 | 20 | 2.0 | - | 25.0 | - | 4.5 | 0.7 | - | 15% | 15 | 20 |
| Test Example | 12 | 20 | 4.0 | - | 25.0 | - | 4.5 | 0.7 | - | 15% | 15 | 20 |

**[Table 3-2]**

| Table 3 | | Hexanal | | | PFPD | | DMDS | | | Oil and Fat | DMTS | Bostwick viscosity |
|---|---|---|---|---|---|---|---|---|---|---|---|---|
| | | Concentration in Fraction A (oil-and-fat mass basis) | Concentration (A)/ Concentration (B) | | Peak area ratio β/α | | Concentration in Fraction B (wet mass basis) | Concentration (A)/ Concentration (B) | | Content in Fraction B | Concentration in Fraction B (wet mass basis) | |
| | | | Concentration ratio (oil-and-fat mass basis) | Decrease ratio before and after heating | Peak area ratio | Increase ratio before and after heating | | Concentration ratio (wet mass basis) | Decrease ratio before and after heating | | | |
| | | ppb | | % | | % | ppb | | % | mass % | ppb | cm |
| Test Example | 13 | 20 | 10.0 | - | 25.0 | - | 4.5 | 0.7 | - | 15% | 15 | 20 |
| Test Example | 14 | 20 | 200 | - | 25.0 | - | 4.5 | 0.7 | - | 15% | 15 | 20 |
| Comparative Example | 15 | 100 | 0.7 | - | 25.0 | - | 4.5 | 0.7 | - | 15% | 5 | 5 |
| Test Example | 16 | 300 | 1.1 | - | 25.0 | - | 4.5 | 0.7 | - | 15% | 5 | 5 |
| Test Example | 17 | 300 | 2.0 | - | 25.0 | - | 4.5 | 0.7 | - | 15% | 5 | 5 |
| Test Example | 18 | 500 | 3.3 | - | 25.0 | - | 4.5 | 0.7 | - | 15% | 5 | 5 |
| Test Example | 19 | 750 | 5.0 | - | 25.0 | - | 4.5 | 0.7 | - | 15% | 5 | 5 |
| Test Example | 20 | 2000 | 13.3 | - | 25.0 | - | 4.5 | 0.7 | | 15% | 5 | 5 |
| Test Example | 21 | 3000 | 20.0 | - | 25.0 | - | 4.5 | 0.7 | - | 15% | 5 | 5 |
| Test Example | 22 | 5000 | 33.3 | - | 25.0 | - | 4.5 | 0.7 | - | 15% | 5 | 5 |
| Test Example | 23 | 10000 | 66.7 | - | 25.0 | - | 4.5 | 0.7 | - | 15% | 5 | 5 |
| Test Example | 24 | 15000 | 100.0 | | 25.0 | | 4.5 | 0.7 | | 15% | 5 | 5 |

**[Tabel 3-3]**

| Table 3 | | Hexanal | | | PFPD | | DMDS | | | Oil and Fat | DMTS | Bostwick viscosity |
|---|---|---|---|---|---|---|---|---|---|---|---|---|
| | | Concentration in Fraction A (oil-and-fat mass basis) | Concentration (A)/ Concentration (B) | | Peak area ratio β/α | | Concentration in Fraction B (wet mass basis) | Concentration (A)/ Concentration (B) | | Content in Fraction B | Concentration in Fraction B (wet mass basis) | |
| | | | Concentration ratio (oil-and-fat mass basis) | Decrease ratio before and after heating | Peak area ratio | Increase ratio before and after heating | | Concentration ratio (wet mass basis) | Decrease ratio before and after heating | | | |
| | | ppb | | % | | % | ppb | | % | mass % | ppb | cm |
| Comparative Example | 25 | 20000 | 133.3 | - | 25.0 | - | 4.5 | 0.7 | - | 15% | 5 | 5 |
| Test Example | 26 | 600 | 4.0 | - | 300 | - | 4.5 | 0.6 | - | 15% | 10 | 10 |
| Test Example | 27 | 600 | 4.0 | - | 300 | - | 45 | 0.6 | - | 15% | 10 | 15 |
| Comparative Example | 28 | 100 | 1.3 | - | 18.8 | - | NO (<1ppt) | - | - | 20% | 5 | 6 |
| Test Example | 29 | 100 | 1.3 | - | 18.8 | - | 2 | 13 | - | 20% | 10 | 6 |
| Test Example | 30 | 200 | 2.7 | - | 25.0 | - | 2 | 1.0 | - | 20% | 30 | 6 |
| Test Example | 31 | 300 | 4.0 | - | 37.5 | - | 2 | 0.8 | - | 20% | 30 | 6 |
| Test Example | 32 | 500 | 67 | - | 75.0 | - | 2 | 05 | - | 20% | 60 | 6 |
| Test Example | 33 | 500 | 6.7 | - | 150.0 | - | 2 | 03 | - | 20% | 60 | 6 |
| Test Example | 34 | 500 | 6.7 | - | 375.0 | - | 2 | 0.1 | - | 20% | 60 | 6 |
| Test Example | 35 | 500 | 6.7 | - | 750.0 | - | 2 | 0.1 | - | 20% | 60 | 6 |
| Test Example | 36 | 500 | 6.7 | - | 1071.4 | - | 2 | 0.0 | - | 20% | 60 | 6 |

**[Table 3-4]**

| Table 3 | | Hexanal PFPD | | | | | DMDS | | | Oil and Fat | DMTS | Bostwick viscosity |
|---|---|---|---|---|---|---|---|---|---|---|---|---|
| | | Concentration in Fraction A (oil-and-fat mass basis) | Concentration (A)/ Concentration (B) | | Peak area ratio β/α | | Concentration in Fraction B (wet mass basis) | Concentration (A)/ Concentration (B) | | Content in Fraction B | Concentration in Fraction B (wet mass basis) | |
| | | | Concentration ratio (oil-and-fat mass basis) | Decrease ratio before and after heating | Peak area ratio | Increase ratio before and after heating | | Concentration ratio (wet mass basis) | Decrease ratio before and after heating | | | |
| | | ppb | | % | | % | ppb | | % | mass % | ppb | cm |
| Test Example | 37 | 100 | 1.3 | - | 250 | - | 4.1 | 0.7 | - | 20% | 80 | 6 |
| Test Example | 38 | 300 | 40 | - | 25.0 | - | 10 | 0.3 | - | 20% | 100 | 6 |
| Test Example | 39 | 600 | 8.0 | - | 25.0 | - | 50 | 0.06 | - | 20% | 300 | 6 |
| Test Example | 40 | 100 | 1.3 | - | 15.0 | - | 100 | 0.05 | - | 20% | 500 | 6 |
| Test Example | 41 | 100 | 1.3 | - | 3.8 | - | 002 | 0.8 | - | 20% | 5 | 10 |
| Test Example | 42 | 100 | 1.3 | - | 3.8 | - | 01 | 0.8 | - | 20% | 10 | 10 |
| Test Example | 43 | 200 | 2.7 | - | 38 | - | 2 | 0.8 | - | 20% | 30 | 10 |
| Test Example | 44 | 500 | 6.7 | - | 3.8 | - | 10 | 0.8 | - | 20% | 30 | 10 |
| Test Example | 45 | 200 | 2.7 | - | 2.5 | - | 50 | 0.6 | - | 20% | 60 | 10 |
| Test Example | 46 | 100 | 1.3 | - | 25 | - | 100 | 0.3 | - | 20% | 80 | 10 |
| Test Example | 47 | 100 | 1.3 | - | 2.5 | - | 300 | 0.10 | - | 20% | 100 | 10 |
| Test Example | 48 | 300 | 4.0 | - | 1.9 | - | 500 | 0.08 | - | 20% | 300 | 10 |

**[Table 3-5]**

| Table 3 | | Hexanal | | | PFPD | | DMDS | | | Oil and Fat | DMTS | Bostwick viscosity |
|---|---|---|---|---|---|---|---|---|---|---|---|---|
| | | Concentration in Fraction A (oil-and-fat mass basis) | Concentration (A)/ Concentration (B) | | Peak area ratio β/α | | Concentration in Fraction B (wet mass basis) | Concentration (A)/ Concentration (B) | | Content in Fraction B | Concentration in Fraction B (wet mass basis) | |
| | | | Concentration ratio (oil-and-fat mass basis) | Decrease ratio before and after heating | Peak area ratio | Increase ratio before and after heating | | Concentration ratio (wet mass basis) | Decrease ratio before and after heating | | | |
| | | ppb | | % | | % | ppb | | % | mass % | ppb | cm |
| Test Example | 49 | 600 | 8.0 | - | 1.9 | - | 800 | 0.05 | - | 20% | 500 | 10 |
| Comparative Example | 50 | 200 | 2.7 | - | 1.9 | - | 1300 | 0.03 | - | 20% | 1000 | 10 |
| Comparative Example | 51 | 0.1 | 0.001 | - | 18.8 | - | NO (<1ppt) | - | - | 20% | 1000 | 10 |
| Test Example | 52 | 50 | 2.5 | - | 125 | - | 20 | 0.5 | - | 20% | 20 | 15 |
| Test Example | 53 | 200 | 2.5 | - | 125 | - | 20 | 0.5 | - | 20% | 20 | 15 |
| Test Example | 54 | 50 | 1.3 | - | 0 1 | - | 50 | 0.8 | - | 45% | 20 | 3 |
| Test Example | 55 | 200 | 5.0 | - | 0.1 | - | 50 | 0.8 | - | 45% | 20 | 3 |
| Test Example | 56 | 50 | 1.3 | - | 5.4 | | 20 | 0.5 | - | 35% | 20 | 5 |
| Test Example | 57 | 200 | 50 | - | 5.4 | - | 20 | 0.5 | - | 35% | 20 | 5 |
| Test Example | 58 | 50 | 1.3 | - | 3.6 | - | 20 | 0.2 | - | 30% | 20 | 5 |
| Test Example | 59 | 200 | 5 0 | - | 3.6 | - | 20 | 0.2 | - | 30% | 20 | 5 |
| Test Example | 60 | 200 | 1.3 | | 3.8 | - | 30 | 0.7 | - | 15% | ND (<1ppt) | 10 |

**[Table 3-6]**

| Table 3 | | Hexanal | | | PFPD | | DMDS | | | Oil and Fat | DMTS | Bostwick viscosity |
|---|---|---|---|---|---|---|---|---|---|---|---|---|
| | | Concentration in Fraction A (oil-and-fat mass basis) | Concentration (A)/ Concentration (B) | | Peak area ratio β/α | | Concentration in Fraction B (wet mass basis) | Concentration (A)/ Concentration (B) | | Content in Fraction B | Concentration in Fraction B (wet mass basis) | |
| | | | Concentration ratio (oil-and-fat mass basis) | Decrease ratio before and after heating | Peak area ratio | Increase ratio before and after heating | | Concentration ratio (wet mass basis) | Decrease ratio before and after heating | | | |
| | | ppb | | % | | % | ppb | | % | mass % | ppb | cm |
| Test Example | 61 | 300 | 20 | - | 3.8 | - | 30 | 0.7 | - | 15% | 0.01 | 10 |
| Test Example | 62 | 300 | 2.0 | - | 3.8 | - | 30 | 0.7 | - | 15% | 0.1 | 10 |
| Test Example | 63 | 300 | 2.0 | - | 38 | - | 30 | 0.7 | - | 15% | 1 | 10 |
| Test Example | 64 | 300 | 20 | - | 3.8 | - | 30 | 0.7 | - | 15% | 10 | 10 |
| Test Example | 65 | 300 | 2.0 | - | 3.8 | - | 30 | 0.7 | - | 15% | 50 | 10 |
| Test Example | 66 | 750 | 50 | | 3.8 | - | 30 | 0.7 | - | 1 5% | 100 | 10 |
| Test Example | 67 | 750 | 50 | - | 3.8 | - | 30 | 07 | - | 15% | 500 | 10 |
| Test Example | 68 | 750 | 50 | - | 3.8 | - | 30 | 0.7 | | 15% | 800 | 10 |
| Test Example | 69 | 750 | 5.0 | - | 3.8 | - | 30 | 0.7 | - | 15% | 1200 | 10 |
| Test Example | 70 | 50 | 2.0 | | 3.8 | - | 30 | 0.7 | | 1% | 5 | 10 |
| Test Example | 71 | 50 | 2.0 | - | 3.8 | - | 30 | 0.7 | - | 5% | 5 | 10 |
| Test Example | 72 | 200 | 1.3 | | 3.8 | | 30 | 0.7 | - | 10% | 10 | 10 |

**[Table 3-7]**

| Table 3 | | Hexanal | | | PFPD | | DMDS | | | Oil and Fat | DMTS | Bostwick viscosity |
|---|---|---|---|---|---|---|---|---|---|---|---|---|
| | | Concentration in Fraction A (oil-and-fat mass basis) | Concentration (A)/ Concentration (B) | | Peak area ratio β/α | | Concentration in Fraction B (wet mass basis) | Concentration (A)/ Concentration (B) | | Content in Fraction B | Concentration in Fraction B (wet mass basis) | |
| | | | Concentration ratio (oil-and-fat mass basis) | Decrease ratio before and after heating | Peak area ratio | Increase ratio before and after heating | | Concentration ratio (wet mass basis) | Decrease ratio before and after heating | | | |
| | | ppb | | % | | % | ppb | | % | mass % | ppb | cm |
| Test Example | 73 | 500 | 3.3 | - | 3.8 | - | 30 | 0.7 | - | 20% | 100 | 10 |
| Test Example | 74 | 750 | 5.0 | | 3.8 | - | 30 | 0.7 | | 30% | 500 | 10 |
| Test Example | 75 | 750 | 5.0 | - | 3.8 | - | 30 | 0.7 | - | 60% | 1000 | 10 |
| Test Example | 76 | 200 | 1.3 | - | 0.05 | - | 3 | 0.01 | - | 5% | 10 | 10 |
| Test Example | 77 | 750 | 5.0 | - | 0.1 | - | 3 | 0.03 | - | 5% | 10 | 10 |
| Test Example | 78 | 750 | 5.0 | - | 1 | - | 3 | 03 | - | 5% | 10 | 10 |
| Test Example | 79 | 750 | 5.0 | | 10 | - | 30 | 0.3 | - | 5% | 10 | 10 |
| Test Example | 80 | 1000 | 6.7 | - | 50 | - | 100 | 04 | - | 5% | 10 | 10 |
| Test Example | 81 | 1500 | 10.0 | - | 100 | - | 300 | 0.3 | - | 5% | 10 | 10 |
| Test Example | 82 | 1500 | 10.0 | - | 300 | | 500 | 0.5 | - | 5% | 10 | 10 |
| Test Example | 83 | 1500 | 10.0 | - | 700 | - | 700 | 0.8 | - | 5% | 10 | 10 |
| Test Example | 84 | 1500 | 10.0 | - | 1150 | - | 950 | 0.9 | - | 2% | 10 | 10 |

**[Table 4-1]**

| Table 4 | | Sensory evaluation | | |
|---|---|---|---|---|
| | | Deterioration odor of Fraction A | Deterioration odor of Fraction B | Overall evaluation |
| Test Example | 1 | 5 | 5 | 3 |
| Test Example | 2 | 5 | 5 | 4 |
| Test Example | 3 | 5 | 5 | 5 |
| Test Example | 4 | 5 | 5 | 5 |
| Comparative Example | 5 | 5 | 5 | 2 |
| Comparative Example | 6 | 5 | 5 | 1 |
| Test Example | 7 | 3 | 5 | 3 |
| Test Example | 8 | 4 | 5 | 4 |
| Test Example | 9 | 5 | 5 | 4 |
| Test Example | 10 | 4 | 5 | 4 |
| Test Example | 11 | 5 | 5 | 5 |
| Test Example | 12 | 5 | 5 | 5 |
| Test Example | 13 | 5 | 5 | 5 |
| Test Example | 14 | 5 | 5 | 5 |
| Comparative Example | 15 | 5 | 5 | 2 |
| Test Example | 16 | 5 | 5 | 4 |
| Test Example | 17 | 5 | 5 | 5 |
| Test Example | 18 | 5 | 5 | 5 |

**[Table 4-2]**

| Table 4 | | Sensory evaluation | | |
|---|---|---|---|---|
| | | Deterioration odor of Fraction A | Deterioration odor of Fraction B | Overall evaluation |
| Test Example | 19 | 5 | 5 | 5 |
| Test Example | 20 | 5 | 5 | 5 |
| Test Example | 21 | 5 | 5 | 4 |
| Test Example | 22 | 5 | 5 | 4 |
| Test Example | 23 | 5 | 5 | 4 |
| Test Example | 24 | 5 | 5 | 3 |
| Comparative Example | 25 | 5 | 5 | 2 |
| Test Example | 26 | 5 | 5 | 5 |
| Test Example | 27 | 5 | 5 | 5 |
| Comparative Example | 28 | 5 | 1 | 2 |
| Test Example | 29 | 5 | 5 | 3 |
| Test Example | 30 | 5 | 5 | 4 |
| Test Example | 31 | 5 | 5 | 5 |
| Test Example | 32 | 5 | 5 | 5 |
| Test Example | 33 | 5 | 5 | 5 |
| Test Example | 34 | 5 | 5 | 5 |
| Test Example | 35 | 5 | 5 | 4 |
| Test Example | 36 | 5 | 5 | 4 |

**[Table 4-3]**

| Table 4 | | Sensory evaluation | | |
|---|---|---|---|---|
| | | Deterioration odor of Fraction A | Deterioration odor of Fraction B | Overall evaluation |
| Test Example | 37 | 5 | 5 | 5 |
| Test Example | 38 | 5 | 5 | 5 |
| Test Example | 39 | 5 | 5 | 5 |
| Test Example | 40 | 5 | 5 | 5 |
| Test Example | 41 | 5 | 3 | 3 |
| Test Example | 42 | 5 | 4 | 4 |
| Test Example | 43 | 5 | 5 | 5 |
| Test Example | 44 | 5 | 5 | 5 |
| Test Example | 45 | 5 | 5 | 5 |
| Test Example | 46 | 5 | 5 | 5 |
| Test Example | 47 | 5 | 5 | 5 |
| Test Example | 48 | 5 | 5 | 5 |
| Test Example | 49 | 5 | 5 | 5 |
| Comparative Example | 50 | 5 | 5 | 2 |
| Comparative Example | 51 | 1 | 1 | 1 |
| Test Example | 52 | 5 | 5 | 5 |
| Test Example | 53 | 5 | 5 | 5 |
| Test Example | 54 | 5 | 5 | 4 |

**[Table 4-4]**

| Table 4 | | Sensory evaluation | | |
|---|---|---|---|---|
| | | Deterioration odor of Fraction A | Deterioration odor of Fraction B | Overall evaluation |
| Test Example | 55 | 5 | 5 | 5 |
| Test Example | 56 | 5 | 5 | 4 |
| Test Example | 57 | 5 | 5 | 5 |
| Test Example | 58 | 5 | 5 | 4 |
| Test Example | 59 | 5 | 5 | 5 |
| Test Example | 60 | 5 | 5 | 4 |
| Test Example | 61 | 5 | 5 | 5 |
| Test Example | 62 | 5 | 5 | 5 |
| Test Example | 63 | 5 | 5 | 5 |
| Test Example | 64 | 5 | 5 | 5 |
| Test Example | 65 | 5 | 5 | 5 |
| Test Example | 66 | 5 | 5 | 5 |
| Test Example | 67 | 5 | 5 | 5 |
| Test Example | 68 | 5 | 5 | 5 |
| Test Example | 69 | 5 | 5 | 4 |
| Test Example | 70 | 5 | 5 | 4 |
| Test Example | 71 | 5 | 5 | 5 |
| Test Example | 72 | 5 | 5 | 5 |

**[Table 4-5]**

| Table 4 | | Sensory evaluation | | |
|---|---|---|---|---|
| | | Deterioration odor of Fraction A | Deterioration odor of Fraction B | Overall evaluation |
| Test Example | 73 | 5 | 5 | 5 |
| Test Example | 74 | 5 | 5 | 5 |
| Test Example | 75 | 5 | 5 | 5 |
| Test Example | 76 | 5 | 5 | 4 |
| Test Example | 77 | 5 | 5 | 5 |
| Test Example | 78 | 5 | 5 | 5 |
| Test Example | 79 | 5 | 5 | 5 |
| Test Example | 80 | 5 | 5 | 5 |
| Test Example | 81 | 5 | 5 | 5 |
| Test Example | 82 | 5 | 5 | 5 |
| Test Example | 83 | 5 | 5 | 5 |
| Test Example | 84 | 5 | 5 | 4 |

### INDUSTRIAL APPLICABILITY

The liquid seasoning of present invention exhibits suppressed off-flavors originating from edible plant ingredients of different sizes and can be stored for a long period of time, and therefore can be used conveniently and widely in food fields such as pasta sauces.

## Claims

1. A liquid seasoning containing edible plant ingredients and satisfying the requirements (1) to (5) below.
(1) The content of an edible-plant-ingredient fraction A, which remains on a sieve with an opening of 2.50 centimeters, is 10 mass % or higher.
(2) The content of an edible-plant-ingredient fraction B, which passes through a sieve with an opening of 2.50 centimeters and remains on a sieve with an opening of 75 micrometers, is 10 mass % or higher and 80 mass % or lower.
(3) The hexanal content in the ingredient fraction A in terms of oil-and-fat mass basis is 1 ppb or higher and 15000 ppb or lower.
(4) The dimethyl disulfide (DMDS) content in the ingredient fraction B in terms of wet mass basis is 0.01 ppb or higher and 1000 ppb or lower.
(5) The mass ratio of the hexanal content in the ingredient fraction A in terms of oil-and-fat mass basis to the hexanal content in the ingredient fraction B in terms of oil-and-fat mass basis is higher than 1.0.

2. The liquid seasoning according to claim 1, wherein the mass ratio of the DMDS content in the ingredient fraction A in terms of wet mass basis to the DMDS content in the ingredient fraction B in terms of wet mass basis is lower than 1.0.

3. The liquid seasoning according to claim 1 or 2, wherein the dimethyl trisulfide (DMTS) content in the ingredient fraction B in terms of wet mass basis is 0.01 ppb or higher and 3000 ppb or lower.

4. The liquid seasoning according to any one of claims 1 to 3, wherein when the ingredient fraction A is separated by one-dimensional GC/MS analysis and the separated ingredients are subjected to measurement using Pulsed Flame Photometric Detection (PFPD), the ratio (β/α) of a PFPD peak area β, where m/z = 61 and 90 are both detected in an interval with retention times of from 13 to 18 minutes, to a PFPD peak area α, where m/z = 45, 79, and 94 are all detected in an interval with retention times of from 8 to 11 minutes, is 0.1 or higher but lower than 1000.

5. The liquid seasoning according to any one of claims 1 to 4, wherein the oil-and-fat content in the fraction B is 2 mass % or higher.

6. The liquid seasoning according to any one of claims 1 to 5, wherein the edible plant in the fraction A and/or in the fraction B contains one or more species of edible plants selected from vegetables, cereals, mushrooms, and fruits.

7. The liquid seasoning according to any one of claims 1 to 6, wherein the edible plant in the fraction A and/or in the fraction B contains a Solanaceae plant and/or an Allium plant.

8. The liquid seasoning according to any one of claims 1 to 7, wherein the edible plant in the fraction A and/or in the fraction B contains one or more species of edible plants selected from tomato, eggplant, small onion, com, shimeji mushroom, and eryngii mushroom.

9. The liquid seasoning according to any one of claims 1 to 8, wherein the fraction A and the fraction B contain edible plants belonging to the same class.

10. The liquid seasoning according to any one of claims 1 to 8, wherein the fraction A and the fraction B contain edible plants belonging to the same species.

11. The liquid seasoning according to any one of claims 1 to 10, wherein the flow-down distance of the liquid seasoning when measured with a Bostwick viscometer (measurement time: 30 seconds, measurement temperature: 80 °C) is 28 cm or less.

12. A method for producing a liquid seasoning according to any one of claims 1 to 11, comprising the steps of:
(i) preparing a liquid mixture containing edible plant ingredients and satisfying
(1) containing an edible-plant-ingredient fraction A, which remains on a sieve with an opening of 2.50 centimeters, in an amount of 10 mass % or higher,
(2) containing an edible-plant-ingredient fraction B, which passes through a sieve with an opening of 2.50 centimeters and remains on a sieve with an opening of 75 micrometers, in an amount of 10 mass % or higher and 80 mass % or lower,
(3) having a hexanal content in the ingredient fraction A of 1 ppb or higher and 15000 ppb or lower in terms of oil-and-fat mass basis,
(4) having a DMDS content in the ingredient fraction B of 0.01 ppb or higher and 1000 ppb or lower in terms of wet mass basis, and
(5) having a mass ratio of the hexanal content in the ingredient fraction A in terms of oil-and-fat mass basis to the hexanal content in the ingredient fraction B in terms of oil-and-fat mass basis of higher than 1.0; and
(ii) heating the liquid mixture at a temperature of 80 °C or higher for 5 minutes or longer.

13. The method according to claim 12, wherein the heating in step (ii) is carried out until the mass ratio of the hexanal content in the ingredient fraction A in terms of oil-and-fat mass basis to the hexanal content in the ingredient fraction B in terms of oil-and-fat mass basis decreases by 10% or more during the heating.

14. The method according to claim 12 or 13, wherein the heating in step (ii) is carried out until when the ingredient fraction A is separated by one-dimensional GC/MS analysis and the separated ingredients are subjected to measurement using Pulsed Flame Photometric Detection (PFPD), the ratio (β/α) of a PFPD peak area β, where m/z = 61 and 90 are both detected in an interval with retention times of from 13 to 18 minutes, to a PFPD peak area α, where m/z = 45, 79, and 94 are all detected in an interval with retention times of from 8 to 11 minutes, increases to 1.0 times or more during the heating.

15. The method according to any one of claims 12 to 14, wherein the heating treatment in step (ii) is carried out until the mass ratio of the DMDS content in the ingredient fraction A to the DMDS content in the ingredient fraction B decreases by 10% or more during the heating.

## Patentansprüche

1. Flüssige Würze, die essbare Pflanzeninhaltsstoffe enthält, und die die nachstehenden Anforderungen (1) bis (5) erfüllt, wobei
(1) der Anteil eines essbaren Pflanzeninhaltsstoff-Bruchteils A, der auf einem Sieb mit einer Öffnung von 2,50 Zentimetern verbleibt, 10 Massen-% oder höher beträgt,
(2) der Anteil eines essbaren Pflanzeninhaltsstoff-Bruchteils B, der durch ein Sieb mit einer Öffnung von 2,50 Zentimetern fließt und auf einem Sieb mit einer Öffnung von 75 Mikrometern verbleibt, 10 Massen-% oder höher und 80 Massen-% oder niedriger beträgt,
(3) der Hexanal-Anteil in dem Inhaltsstoff-Bruchteil A in Bezug auf eine Öl-und-Fett-Massebasis 1 ppb oder höher und 15000 ppb oder niedriger beträgt,
(4) der Dimethyldisulfid(DMDS)-Anteil in dem Inhaltsstoff-Bruchteil B in Bezug auf eine feuchte Massebasis 0,01 ppb oder höher und 1000 ppb oder niedriger beträgt,
(5) das Masseverhältnis des Hexanal-Anteils in dem Inhaltsstoff-Bruchteil A in Bezug auf eine Öl-und-Fett-Massebasis zu dem Hexanal-Anteil in dem Inhaltsstoff-Bruchteil B in Bezug auf eine Öl-und-Fett-Massebasis höher als 1,0 ist.

2. Flüssige Würze nach Anspruch 1, wobei das Masseverhältnis des DMDS-Anteils in dem Inhaltsstoff-Bruchteil A in Bezug auf eine feuchte Massebasis zu dem DMDS-Anteil in dem Inhaltsstoff-Bruchteil B in Bezug auf eine feuchte Massebasis niedriger als 1,0 ist.

3. Flüssige Würze nach Anspruch 1 oder 2, wobei der Dimethyltrisulfid(DMTS)-Anteil in dem Inhaltsstoff-Bruchteil B in Bezug auf eine feuchte Massebasis 0,01 ppb oder höher und 3000 ppb oder niedriger beträgt.

4. Flüssige Würze nach einem der Ansprüche 1 bis 3, wobei, wenn der Inhaltsstoff-Bruchteil A durch eine eindimensionale GC/MS-Analyse getrennt wird und die getrennten Inhaltsstoffe unter Verwendung einer gepulsten Flammen-Photometriedetektion (PFPD) einer Messung unterzogen werden, das Verhältnis (β/α) eines PFPD-Spitzenwertbereichs β, wenn m/z = 61 und 90 beide in einem Intervall mit Retentionszeiten von 13 bis18 Minuten erfasst werden, zu einem PFPD-Spitzenwertbereich α, wenn m/z = 45, 79 und 94 alle in einem Intervall mit Retentionszeiten von 8 bis 11 Minuten erfasst werden, 0,1 oder höher, aber niedriger als 1000 ist.

5. Flüssige Würze nach einem der Ansprüche 1 bis 4, wobei der Öl-und-Fett-Anteil in dem Bruchteil B 2 Massen-% oder höher beträgt.

6. Flüssige Würze nach einem der Ansprüche 1 bis 5, wobei die essbare Pflanze in dem Bruchteil A und/oder in dem Bruchteil B eine oder mehrere Arten von essbaren Pflanzen enthält, die aus Gemüsepflanzen, Getreidearten, Pilzen und Früchten ausgewählt werden.

7. Flüssige Würze nach einem der Ansprüche 1 bis 6, wobei die essbare Pflanze in dem Bruchteil A und/oder in dem Bruchteil B ein Nachtschattengewächs (Solanaceae) und/oder eine Allium-Pflanze enthält.

8. Flüssige Würze nach einem der Ansprüche 1 bis 7, wobei die essbare Pflanze in dem Bruchteil A und/oder in dem Bruchteil B eine oder mehrere Arten von essbaren Pflanzen enthält, die aus Tomaten, Auberginen, kleinen Zwiebeln, Mais, Shimejy-Pilzen und Kräuterseitlingen ausgewählt werden.

9. Flüssige Würze nach einem der Ansprüche 1 bis 8, wobei der Bruchteil A und der Bruchteil B essbare Pflanzen enthalten, die derselben Klasse angehören.

10. Flüssige Würze nach einem der Ansprüche 1 bis 8, wobei der Bruchteil A und der Bruchteil B essbare Pflanzen enthalten, die derselben Art angehören.

11. Flüssige Würze nach einem der Ansprüche 1 bis 10, wobei die Abfließstrecke der flüssigen Würze, wenn sie mit einem Bostwick-Viskometer gemessen wird (Messzeit: 30 Sekunden, Messtemperatur: 80 °C) 28 cm oder weniger beträgt.

12. Verfahren zum Herstellen einer flüssigen Würze nach einem der Ansprüche 1 bis 11, umfassend die Schritte zum:
(i) Vorbereiten einer flüssigen Mischung, die essbare Pflanzeninhaltsstoffe enthält und Folgendes erfüllt
(1) Enthalten eines essbaren Pflanzeninhaltsstoff-Bruchteils A, der auf einem Sieb mit einer Öffnung von 2,50 Zentimetern verbleibt, in einer Menge von 10 Massen-% oder höher,
(2) Enthalten eines essbaren Pflanzeninhaltsstoff-Bruchteils B, der durch ein Sieb mit einer Öffnung von 2,50 Zentimetern fließt und auf einem Sieb mit einer Öffnung von 75 Mikrometern verbleibt, in einer Menge von 10 Massen-% oder höher und 80 Massen-% oder niedriger,
(3) Aufweisen eines Hexanal-Anteils in dem Inhaltsstoff-Bruchteil A von 1 ppb oder höher und 15000 ppb oder niedriger in Bezug auf eine Öl-und-Fett-Massebasis,
(4) Aufweisen eines DMDS-Anteils in dem Inhaltsstoff-Bruchteil B von 0,01 ppb oder höher und 1000 ppb oder niedriger in Bezug auf eine feuchte Massebasis,
(5) Aufweisen eines Masseverhältnisses des Hexanal-Anteils in dem Inhaltsstoff-Bruchteil A in Bezug auf eine Öl-und-Fett-Massebasis zu dem Hexanal-Anteil in dem Inhaltsstoff-Bruchteil B in Bezug auf eine feuchte Massebasis, die höher als 1,0 ist; und
(ii) Erwärmen der flüssigen Mischung für 5 Minuten oder länger auf eine Temperatur von 80 °C oder höher.

13. Verfahren nach Anspruch 12, wobei das Erwärmen in Schritt (ii) so lange ausgeführt wird, bis das Masseverhältnis des Hexanal-Anteils in dem Inhaltsstoff-Bruchteil A in Bezug auf eine Öl-und-Fett-Massebasis zu dem Hexanal-Anteil in dem Inhaltsstoff-Bruchteil B in Bezug auf eine Öl-und-Fett-Massebasis während des Erwärmens um 10 % abnimmt.

14. Verfahren nach Anspruch 12 oder 13, wobei das Erwärmen in Schritt (ii) so lange ausgeführt wird, bis, wenn der Inhaltsstoff-Bruchteil A durch eine eindimensionale GC/MS-Analyse getrennt wird und die getrennten Inhaltsstoffe unter Verwendung einer gepulsten Flammen-Photometriedetektion (PFPD) einer Messung unterzogen werden, das Verhältnis (β/α) eines PFPD-Spitzenwertbereichs β, wenn m/z = 61 und 90 beide in einem Intervall mit Retentionszeiten von 13 bis 18 Minuten erfasst werden, zu einem PFPD-Spitzenwertbereich α, wenn m/z = 45, 79 und 94 alle in einem Intervall mit Retentionszeiten von 8 bis 11 Minuten erfasst werden, sich um 1,0 mal oder mehr während des Erwärmens erhöht.

15. Verfahren nach einem der Ansprüche 12 bis 14, wobei die Wärmebehandlung in Schritt (ii) so lange ausgeführt wird, bis das Masseverhältnis des DMDS-Anteils in dem Inhaltsstoff-Bruchteil A zu dem DMDS-Anteil in dem Inhaltsstoff-Bruchteil B während des Erwärmens um 10 % oder mehr abnimmt.

## Revendications

1. Assaisonnement liquide contenant des ingrédients végétaux comestibles et satisfaisant les conditions requises (1) à (5) ci-dessous.
(1) La teneur de la fraction d'ingrédients végétaux comestibles A, qui reste sur un tamis doté d'une ouverture de 2,50 centimètres, est supérieure ou égale à 10 % en poids.
(2) La teneur de la fraction d'ingrédients végétaux comestibles B, qui passe à travers un tamis doté d'une ouverture de 2,50 centimètres et reste sur un tamis doté d'une ouverture de 75 micromètres, est supérieure ou égale à 10 % en poids et inférieure ou égale à 80 % en poids.
(3) La teneur en hexanal dans la fraction d'ingrédients A en termes de base de masse d'huile et de graisse est supérieure ou égale à 1 ppb et inférieure ou égale à 15000 ppb.
(4) La teneur en disulfure de diméthyle (DMDS) dans la fraction d'ingrédients B en termes de base de masse humide est supérieure ou égale à 0,01 ppb et inférieure ou égale à 1000 ppb.
(5) Le rapport massique de la teneur en hexanal dans la fraction d'ingrédients A en termes de base de masse d'huile et de graisse à la teneur en hexanal dans la fraction d'ingrédients B en termes de base de masse d'huile et de graisse est supérieur à 1,0.

2. Assaisonnement liquide selon la revendication 1, ledit rapport massique de la teneur en DMDS dans la fraction d'ingrédients A en termes de base de masse humide à la teneur en DMDS dans la fraction d'ingrédients B en termes de base de masse humide étant inférieur à 1,0.

3. Assaisonnement liquide selon la revendication 1 ou 2, ladite teneur en trisulfure de diméthyle (DMTS) dans la fraction d'ingrédients B en termes de base de masse humide étant supérieure ou égale à 0,01 ppb et inférieure ou égale à 3000 ppb.

4. Assaisonnement liquide selon l'une quelconque des revendications 1 à 3, lorsque ladite fraction d'ingrédients A est séparée par analyse CG/SM unidimensionnelle et que les ingrédients séparés sont soumis à une mesure en utilisant la détection photométrique à flamme pulsée (PFPD), le rapport (β/α) de la surface de pic de PFPD β, où m/z = 61 et 90 sont tous deux détectés dans un intervalle avec des temps de rétention compris entre 13 et 18 minutes, à la surface de pic de PFPD α, où m/z = 45, 79 et 94 sont tous détectés dans un intervalle avec des temps de rétention compris entre 8 et 11 minutes, étant supérieur ou égal à 0,1 mais inférieur à 1000.

5. Assaisonnement liquide selon l'une quelconque des revendications 1 à 4, ladite teneur en huile et graisse dans la fraction B étant supérieure ou égale à 2 % en poids.

6. Assaisonnement liquide selon l'une quelconque des revendications 1 à 5, ladite plante comestible dans la fraction A et/ou dans la fraction B contenant une ou plusieurs espèces de plantes comestibles choisies parmi les légumes, les céréales, les champignons et les fruits.

7. Assaisonnement liquide selon l'une quelconque des revendications 1 à 6, ladite plante comestible dans la fraction A et/ou dans la fraction B contenant une plante de la famille des Solanacées et/ou une plante de la famille des Alliacées.

8. Assaisonnement liquide selon l'une quelconque des revendications 1 à 7, ladite plante comestible dans la fraction A et/ou dans la fraction B contenant une ou plusieurs espèces de plantes comestibles choisies parmi la tomate, l'aubergine, l'oignon de petite taille, le champignon Shimeji et le champignon Eryngii.

9. Assaisonnement liquide selon l'une quelconque des revendications 1 à 8, ladite fraction A et ladite fraction B contenant des plantes comestibles appartenant à la même classe.

10. Assaisonnement liquide selon l'une quelconque des revendications 1 à 8, ladite fraction A et ladite fraction B contenant des plantes comestibles appartenant à la même espèce.

11. Assaisonnement liquide selon l'une quelconque des revendications 1 à 10, la distance d'écoulement vers le bas de l'assaisonnement liquide lorsqu'elle est mesurée avec un viscosimètre de Bostwick (temps de la mesure : 30 secondes, température de mesure : 80°C) étant inférieure ou égale à 28 cm.

12. Procédé de production d'un assaisonnement liquide selon l'une quelconque des revendications 1 à 11, comprenant les étapes de :
(i) préparation d'un mélange liquide contenant des ingrédients végétaux comestibles et satisfaisant
(1) contenant une fraction d'ingrédients végétaux comestibles A, qui reste sur un tamis doté d'une ouverture de 2,50 centimètres, en une quantité supérieure ou égale à 10 % en poids,
(2) contenant une fraction d'ingrédients végétaux comestibles B, qui passe à travers un tamis doté d'une ouverture de 2,50 centimètres et reste sur un tamis doté d'une ouverture de 75 micromètres, en une quantité supérieure ou égale à 10 % en poids et inférieure ou égale à 80 % en poids,
(3) présentant une teneur en hexanal dans la fraction d'ingrédients A supérieure ou égale à 1 ppb et inférieure ou égale à 15000 ppb en termes de base de masse d'huile et de graisse,
(4) présentant une teneur en DMDS dans la fraction d'ingrédients B supérieure ou égale à 0,01 ppb et inférieure ou égale à 1000 ppb en termes de base de masse humide, et
(5) présentant un rapport massique de la teneur en hexanal dans la fraction d'ingrédients A en termes de base masse d'huile et de graisse à la teneur en hexanal dans la fraction d'ingrédients B en termes de base masse d'huile et de graisse supérieur à 1,0 ; et
(ii) chauffage du mélange liquide à une température supérieure ou égale à 80°C pendant au moins 5 minutes.

13. Procédé selon la revendication 12, ledit chauffage à l'étape (ii) étant effectué jusqu'à ce que le rapport massique de la teneur en hexanal dans la fraction d'ingrédients A en termes de base de masse d'huile et de graisse à la teneur en hexanal dans la fraction d'ingrédients B en termes de base de masse d'huile et de graisse diminue d'au moins 10 % lors du chauffage.

14. Procédé selon la revendication 12 ou 13, ledit chauffage à l'étape (ii) étant effectué jusqu' à ce que lorsque la fraction d'ingrédient A est séparée par analyse CG/SM unidimensionnelle et que les ingrédients séparés sont soumis à une mesure en utilisant la détection photométrique à flamme pulsée (PFPD), le rapport (β/α) de la surface de pic de PFPD β, où m/z = 61 et 90 sont tous deux détectés dans un intervalle avec des temps de rétention compris entre 13 et 18 minutes, à la surface de pic de PFPD α, où m/z = 45, 79 et 94 sont tous détectés dans un intervalle avec des temps de rétention compris entre 8 et 11 minutes, augmente d'un facteur supérieur ou égal à 1,0 lors du chauffage.

15. Procédé selon l'une quelconque des revendications 12 à 14, ledit traitement par chauffage à l'étape (ii) étant effectué jusqu'à ce que le rapport massique de la teneur en DMDS dans la fraction d'ingrédients A à la teneur en DMDS dans la fraction d'ingrédients B diminue d'au moins 10 % lors du chauffage.
